(19)

**Europäisches Patentamt**
**European Patent Office**
**Office européen des brevets**

(11)  **EP 4 697 702 A1**

(12)  **EUROPEAN PATENT APPLICATION**
published in accordance with Art. 153(4) EPC

(43) Date of publication:
**18.02.2026   Bulletin 2026/08**

(21) Application number: **24789104.7**

(22) Date of filing: **15.04.2024**

(51) International Patent Classification (IPC):
**H04N 19/11** (2014.01)        **H04N 19/105** (2014.01)
**H04N 19/593** (2014.01)       **H04N 19/70** (2014.01)

(52) Cooperative Patent Classification (CPC):
**H04N 19/105; H04N 19/11; H04N 19/593;**
**H04N 19/70**

(86) International application number:
**PCT/KR2024/005015**

(87) International publication number:
**WO 2024/215164 (17.10.2024 Gazette 2024/42)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  **13.04.2023   KR 20230048604**

(71) Applicant: **LG Electronics Inc.**
**Yeongdeungpo-gu**
**Seoul 07336 (KR)**

(72) Inventors:
• **HONG, Myungoh**
**Seoul 06772 (KR)**

• **YOO, Sunmi**
**Seoul 06772 (KR)**
• **CHOI, Jangwon**
**Seoul 06772 (KR)**
• **LIM, Jaehyun**
**Seoul 06772 (KR)**
• **JANG, Hyeong Moon**
**Seoul 06772 (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54)  **INTRA PREDICTION-BASED IMAGE ENCODING/DECODING METHOD, METHOD FOR TRANSMITTING BITSTREAM, AND RECORDING MEDIUM ON WHICH BITSTREAM IS STORED**

(57)    According to the present disclosure, an intra prediction-based image encoding/decoding method and device, and a recording medium on which a bitstream is stored are presented. The image decoding method may comprise the steps of: generating a first prediction block on the basis of an intra template matching prediction; generating a second prediction block on the basis of a specific intra prediction mode; and generating a final prediction block on the basis of the first prediction block and the second prediction block.

EP 4 697 702 A1

[Figure 10]

```
                          S1001
                    ╭─────────────╮
                    │ IntraTMP flag │
                    ╰─────────────╯
                           │
                           ▼      S1002
                  ┌──────────────────┐
                  │ Get template shape │
                  └──────────────────┘
                           │
                           ▼      S1003
                  ┌──────────────────────┐
                  │ Search best N templates │
                  └──────────────────────┘
                           │
                           ▼      S1004          true
                      ◇ Filtered fusion ◇──────────────────────┐
                           │                                    │
                       false   S1005                            │
                  ┌────────────────────┐                        │
                  │ Candidates reordering │                     │
                  └────────────────────┘                        │
                           │                                    │
                           ▼      S1006                         │
                  ┌────────────────────┐                        │
                  │ Get candidate index  │                      │
                  └────────────────────┘                        │
                           │                                    │
                           ▼      S1007                         │
                  ┌──────────────────┐                          │
                  │ Fractional search  │                        │
                  └──────────────────┘                          │
                           │                                    │
                           ▼      S1008                         │
                  ┌──────────────┐                              │
                  │ Filtered TMP   │                            │
                  └──────────────┘                              │
                           │                                    │
                           ▼      S1009      false              │
                      ◇ Intra fusion ◇──────────────┐           │
                           │                         │          │
                        true   S1010          S1011  │   S1012  │
                  ┌──────────────┐      ┌──────────┐ │ ┌──────────────┐
                  │ IntraTMP fusion│      │ IntraTMP │ │ │ Filter based   │
                  └──────────────┘      └──────────┘   │ IntraTMP fusion│
                                                       └──────────────┘
```

**Description**

[Technical Field]

The present disclosure relates to an intra prediction-based image encoding/decoding method, a method of transmitting a bitstream, and a recording medium storing a bitstream, and more particularly, to an image encoding/decoding method using a plurality of intra prediction blocks including an intra template matching prediction (intraTMP) block, a method of transmitting a bitstream, and a recording medium storing a bitstream.

[Background Art]

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

[Disclosure]

[Technical Problem]

The present disclosure is directed to providing an image encoding/decoding method and apparatus with improved encoding/decoding efficiency.

The present disclosure is also directed to providing an image encoding/decoding method and apparatus employing prediction blocks in a plurality of screens to improve coding quality.

The present disclosure is also directed to providing an image encoding/decoding method and apparatus for generating a final prediction block from a plurality of intra prediction blocks.

The present disclosure is also directed to providing a non-transitory computer-readable recording medium for storing a bitstream generated using an image encoding method or apparatus according to the present disclosure.

The present disclosure is also directed to providing a non-transitory computer-readable recording medium for storing a bitstream that is received and decoded by an image decoding apparatus according to the present disclosure and used for image reconstruction.

The present disclosure is also directed to providing a method of transmitting a bitstream generated using an image decoding method or apparatus according to the present disclosure.

Technical objects to be achieved in the present disclosure are not limited to those described above, and other technical objects that have not been described will be clearly understood by those skilled in the technical field to which the present disclosure pertains from the following description.

[Technical Solution]

An image decoding method according to an aspect of the present disclosure includes generating a first prediction block on the basis of intra template matching prediction (intraTMP), generating a second prediction block on the basis of a specific intra prediction mode, and generating a final prediction block on the basis of the first prediction block and the second prediction block.

Meanwhile, according to an embodiment of the present disclosure, the specific intra prediction mode may be an intra prediction mode derived through template-based intra mode derivation (TIMD) or decoder-side intra mode derivation (DIMD).

Meanwhile, according to an embodiment of the present disclosure, the second prediction block may be a plurality of prediction blocks generated on the basis of a plurality of intra prediction modes derived through TIMD or DIMD.

Meanwhile, according to an embodiment of the present disclosure, the specific intra prediction mode may be derived on the basis of a template shape of the intraTMP.

Meanwhile, according to an embodiment of the present disclosure, the template shape may be acquired from a bitstream.

Meanwhile, according to an embodiment of the present disclosure, the first prediction block may be generated on the basis of a prediction block selected from an intraTMP mode list.

Meanwhile, according to an embodiment of the present disclosure, the selected prediction mode may be selected on the basis of prediction mode index information.

Meanwhile, according to an embodiment of the present disclosure, the intraTMP mode list may include at least one of a default mode, a filtering mode, a sub-pel search mode, an intra fusion mode, a cost-based fusion mode, and a filter-based fusion mode.

Meanwhile, according to an embodiment of the present disclosure, the intraTMP mode list may include a prediction mode generated as a combination of at least one of a default mode, a filtering mode, a sub-pel search mode, an intra fusion mode, a cost-based fusion mode, and a filter-based fusion mode.

Meanwhile, according to an embodiment of the present disclosure, the cost-based fusion mode may be based on an error calculated using a sum of difference (SAD), a sum of transformed difference (SATD), a sum of squared error (SSE), a mean-removed sum of difference (MR-SAD), a mean-removed sum of squared error (MR-SSE), or a mean-removed sum of transformed difference (MR-SATD).

Meanwhile, according to an embodiment of the present disclosure, the first block may be a prediction block acquired by combining a plurality of intraTMP blocks.

An image encoding method according to another aspect of the present disclosure includes generating a first prediction block on the basis of intraTMP, generating a second prediction block on the basis of a specific intra prediction mode, and generating a final prediction block on the basis of the first prediction block and the second prediction block.

A computer-readable recording medium according to another aspect of the present disclosure stores a bitstream generated using the image encoding method or apparatus of the present disclosure.

A transmission method according to another aspect of the present disclosure includes transmitting a bitstream generated using the image encoding method or apparatus of the present disclosure.

The features of the present disclosure briefly described above are merely illustrative aspects of detailed description of the present disclosure and do not limit the scope of the present disclosure.

[Advantageous Effects]

According to the present disclosure, it is possible to provide an image encoding/decoding method and apparatus with improved encoding/decoding efficiency.

According to the present disclosure, it is also possible to provide an image encoding/decoding method and apparatus for generating a prediction block in a final screen using prediction blocks in a plurality of screens.

According to the present disclosure, it is also possible to provide an image encoding/decoding method and apparatus employing an intra template matching prediction (intraTMP) block.

According to the present disclosure, it is also possible to provide an image encoding/decoding method and apparatus with improved prediction efficiency and coding and image quality.

According to the present disclosure, it is also possible to provide a non-transitory computer-readable recording medium for storing a bitstream generated using an image encoding method or apparatus according to the present disclosure.

According to the present disclosure, it is also possible to provide a non-transitory computer-readable recording medium for storing a bitstream that is received and decoded by an image decoding apparatus according to the present disclosure and used for image reconstruction.

According to the present disclosure, it is also possible to provide a method of transmitting a bitstream generated using an image encoding method or apparatus according to the present disclosure.

Effects of the present disclosure are not limited to those described above, and other effects that have not been described will be clearly understood by those skilled in the technical field to which the present disclosure pertains from the following description.

[Description of Drawings]

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an

FIG. 4 is a flowchart showing an example of an intra prediction mode signaling method of an encoding apparatus.

FIG. 5 is a flowchart showing an example of an intra prediction mode determination method of a decoding apparatus.

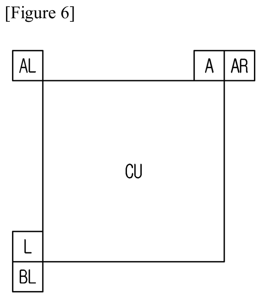

FIG. 6 is a diagram showing an example of neighboring blocks used for most probable mode (MPM) list derivation.

FIG. 7 is a diagram illustrating a method of building a decoder-side intra mode derivation (DIMD) histogram of gradients (HoG).

FIG. 8 is a diagram illustrating a method of configuring a prediction block in a DIMD mode.

FIG. 9 is a diagram illustrating an intra template matching search area in use.

FIG. 10 is a diagram illustrating an image coding method based on an intra template matching prediction (intraTMP) mode according to an embodiment of the present disclosure.

FIG. 11 is a set of diagrams illustrating template shapes applicable to an embodiment of the present disclosure.

FIG. 12 is a set of diagrams illustrating a template search method and an error calculation method that are applicable to an embodiment of the present disclosure.

FIG. 13 is a diagram illustrating a half-pel search method applicable to an embodiment of the present disclosure.

FIG. 14 is a diagram illustrating a TMP filtering process applicable to an embodiment of the present disclosure.

FIG. 15 is a diagram illustrating a plurality of reference template areas according to an embodiment of the present disclosure and a current template area.

FIG. 16 is a diagram illustrating a top template area of intraTMP according to an embodiment of the present disclosure.

FIG. 17 is a diagram illustrating a left template area of intraTMP according to an embodiment of the present disclosure.

FIG. 18 is a diagram illustrating an image decoding method and/or an image encoding method according to an embodiment of the present disclosure.

FIG. 19 is a view showing a content streaming system to which an embodiment of the present disclosure is applicable.

[Modes of the Invention]

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "picture" generally refers to a unit representing one image at a specific time, and a slice/tile is a coding unit constituting a portion of a picture, and a picture may be composed of one or more slices/tiles. In addition, a slice/tile may include one or more coding tree units (CTUs).

A "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. The unit may be used interchangeably with the terms such as "sample array", "block" or "area" in some cases. In a general case, an M×N block may include a set (or array) of samples (or a sample array) or transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

Overview of video coding system

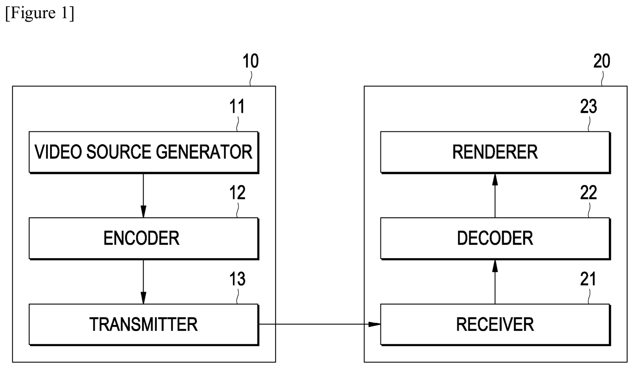

FIG. 1 is a view showing a video coding system to which an embodiment of the present disclosure is applicable.

The video coding system according to an embodiment may include an encoding device 10 and a decoding device 20. The encoding device 10 may deliver encoded video and/or image information or data to the decoding device 20 in the form of a file or streaming via a digital storage medium or network.

The encoding device 10 according to an embodiment may include a video source generator 11, an encoding unit(encoder) 12 and a transmitter 13. The decoding device 20 according to an embodiment may include a receiver 21, a decoding unit(decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 12, and in this case, the transmission device may include at least one processor that acquires encoded video/image information or data output in the form of a bitstream and a transmission unit for transmitting it in the form of a file or streaming. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

Overview of image encoding apparatus

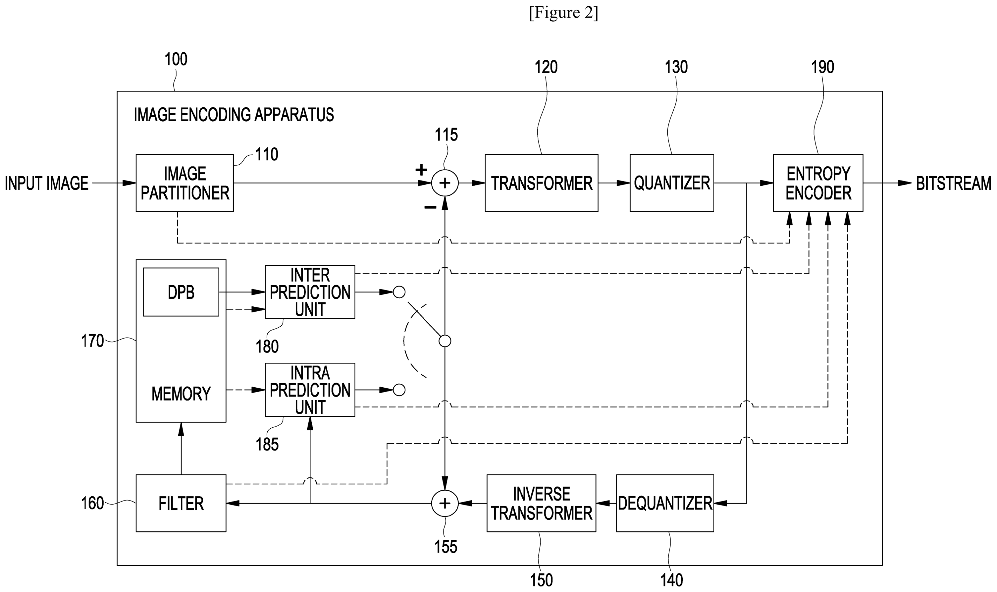

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

Overview of image decoding apparatus

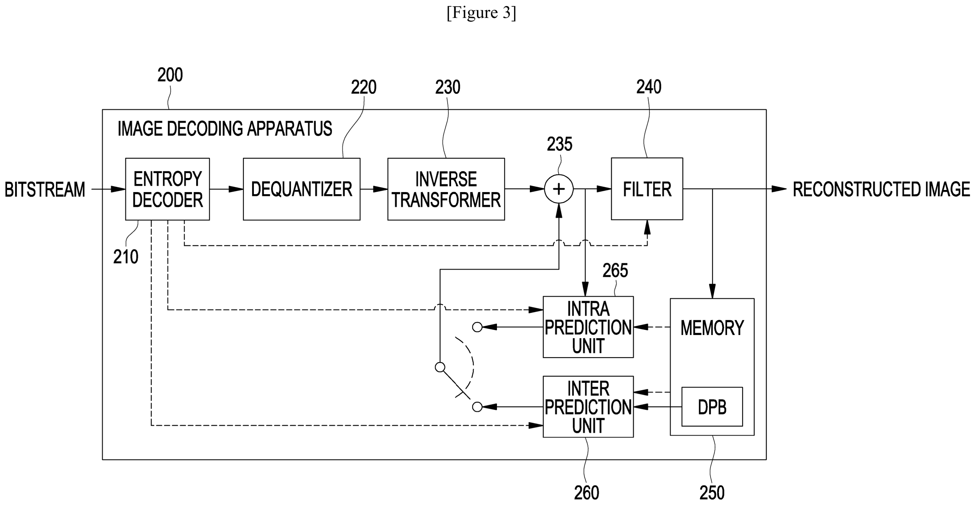

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter prediction unit 260 and an intra prediction unit 265. The inter prediction unit 260 and the intra prediction unit 265 may be collectively referred to as a "prediction unit". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter prediction unit 260, and the intra prediction unit 265 of the image decoding apparatus 200.

Determining intra prediction mode/type

When intra prediction is applied, an intra prediction mode applied to a current block may be determined using an intra prediction mode of a neighboring block. For example, a decoding apparatus may select one of most probable mode (MPM) candidates in an MPM list derived on the basis of an intra prediction mode of a neighboring block (e.g., a left and/or top neighboring block) of the current block and additional candidate modes or may select one of other intra prediction modes not included in the MPM candidates (and a planar mode) on the basis of remaining intra prediction mode information. The MPM list may be configured to include or not include the planar mode as a candidate. For example, when the MPM list includes the planar mode as a candidate, the MPM list may have six candidates, and when the MPM list does not include the planar mode as a candidate, the MPM list may have three candidates. When the MPM list does not include the planar mode as a candidate, a not-planar flag (e.g., intra_luma_not_planar_flag) indicating that the intra prediction mode of the current block is not the planar mode may be signaled. For example, an MPM flag may be signaled first, and when the MPM flag has a value of 1, an MPM index and the not-planar flag may be signaled. Also, the MPM index may be signaled when the not-planar flag has a value of 1. Here, the MPM list is configured not to include the planar mode as a candidate not for the purpose of indicating that the planar mode is not an MPM but for the purpose of checking whether the intra prediction mode of the current block is the planar mode by signaling the not-planar flag because the planar mode is always considered an MPM.

For example, it may be indicated on the basis of the MPM flag (e.g., intra_luma_mpm _flag) whether an intra prediction mode applied to the current block is among MPM candidates (and the planar mode) or among remaining modes. An MPM flag value of 1 may represent that the intra prediction mode of the current block is among MPM candidates (and the planar mode), and an MPM flag value of 0 may represent that the intra prediction mode of the current block is not among MPM candidates (and the planar mode). The not-planar flag (e.g., intra_luma_not_planar_flag) value of 0 may represent that the intra prediction mode of the current block is the planar mode, and the not-planar flag value of 1 may represent that the intra prediction mode of the current block is not the planar mode. The MPM index may be signaled in the form of a syntax element, mpm_idx or intra_luma_mpm_index, and the remaining intra prediction mode information may be signaled in the form of a syntax element, rem_intra_luma_pred_mode or intra_luma_mpm_remainder. For example, the remaining intra prediction mode information may indicate one of other intra prediction modes that are not included in the MPM candidates (and the planar mode) and are indexed in order of prediction mode number, among all intra prediction modes. The intra prediction mode may be an intra prediction mode for a luma component (sample). Hereinafter, intra prediction mode information may include at least one of an MPM flag (e.g., intra_luma_mpm_flag), a not-planar flag (e.g., intra_luma_not_planar_flag), an MPM index (e.g., mpm_idx or intra_luma_mpm_idx), and remaining intra prediction mode information (rem intra_luma_pred_mode or intra_luma_mpm_remainder). In the present document, an MPM list may also be referred to by various terms such as "MPM candidate list," "candModeList," and the like. When matrix-based intra prediction (MIP) is applied to the current block, an additional MPM flag (e.g., intra_mip_mpm_flag), MPM index (e.g., intra_mip_mpm_idx), and remaining intra prediction mode information (e.g., intra_mip_mpm_remainder) for MIP may be signaled, and the not-planar flag is not signaled.

The intra prediction mode signaling procedure of an encoding apparatus and the intra prediction mode determination procedure of a decoding apparatus may be performed as follows by way of example.

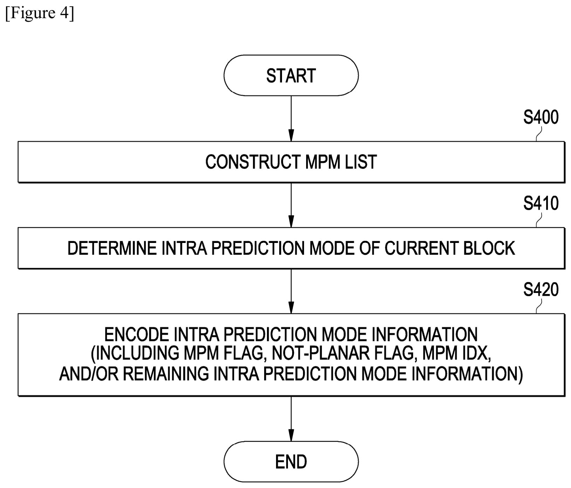

FIG. 4 is a flowchart showing an example of an intra prediction mode signaling method of an encoding apparatus.

Referring to FIG. 4, the encoding apparatus constructs an MPM list for a current block (S400). The MPM list may include candidate intra prediction modes that are highly likely to be applied to the current block (MPM candidates). The MPM list may include an intra prediction mode of a neighboring block and further include specific intra prediction modes according to a predetermined method. A detailed method of constructing the MPM list will be described below.

The encoding apparatus determines an intra prediction mode of the current block (S410). The encoding apparatus may perform prediction on the basis of various intra prediction modes and determine an optimal intra prediction mode on the basis of rate-distortion optimization (RDO) based on the prediction. In this case, the encoding apparatus may determine the optimal intra prediction mode using only MPM candidates included in the MPM list and the planar mode or may determine the optimal intra prediction mode not only the MPM candidates included in the MPM list and the planar mode but also other intra prediction modes. As a specific example, when an intra prediction type of the current block is a specific type (e.g., linear interpolation intra prediction (LIP), multiple reference line (MRL), or intra sub-partitions (ISP)) rather than a normal intra prediction type, the encoding apparatus may determine the optimal intra prediction mode by considering only the MPM candidates and the planar mode as intra prediction mode candidates for the current block. In other words, in this case, the intra prediction mode of the current block may be determined among only the MPM candidates and the planar mode, and the MPM flag may be neither encoded nor signaled. In this case, the decoding apparatus may estimate that the MPM flag has a value of 1 without being signaled with the MPM flag.

Meanwhile, when the intra prediction mode of the current block is not the planar mode but one of the MPM candidates in the MPM list, the encoding apparatus generally generates an MPM index mpm idx indicating one of the MPM candidates.

When the intra prediction mode of the current block is not in the MPM list, the encoding apparatus generates remaining intra prediction mode information indicating the intra prediction mode of the current block among other intra prediction modes not included in the MPM list (and the planar mode).

The encoding apparatus may encode and output the intra prediction mode information in the form of a bitstream. The intra prediction mode information may include the above-described MPM flag, planar flag, not-planar flag, MPM index, and/or remaining intra prediction mode information. In general, the MPM index and the remaining intra prediction mode information are alternatives to each other and thus are not simultaneously signaled to indicate an intra prediction mode of one block. In other words, an MPM flag value of 1 and the not-planar flag or the MPM index are signaled together, or an MPM flag value of 0 and the remaining intra prediction mode information are signaled together. However, as described above, when a specific intra prediction type is applied to the current block, no MPM flag is signaled, and only the not-planar flag and/or the MPM index may be signaled. In other words, in this case, the intra prediction mode information may include only the not-planar flag and/or the MPM index.

The decoding apparatus may determine an intra prediction mode in accordance with the intra prediction mode information determined and signaled by the encoding apparatus.

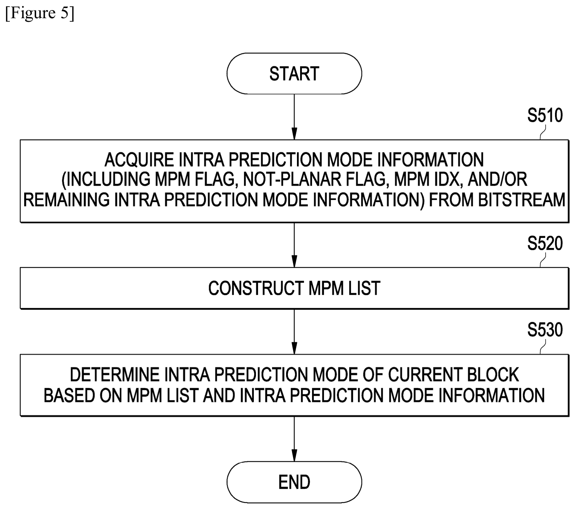

FIG. 5 is a flowchart showing an example of an intra prediction mode determination method of a decoding apparatus.

Referring to FIG. 5, the decoding apparatus acquires intra prediction mode information from the bitstream (S500). As described above, the intra prediction mode information may include at least one of the MPM flag, the planar flag, the not-planar flag, the MPM index, and the remaining intra prediction mode information.

The decoding apparatus constructs an MPM list (S510). The MPM list may be the same as the MPM list generated by the encoding apparatus. In other words, the MPM list may include an intra prediction mode of a neighboring block or further include specific intra prediction modes according to a predetermined method. A detailed method of constructing the MPM list will be described below.

Although S510 is shown to be performed after S500, this is illustrative, and S500 may be performed before S500 or at the same time as S500.

The decoding apparatus determines an intra prediction mode of the current block on the basis of the MPM list and the intra prediction mode information (S520). As an example, when the MPM flag has a value of 1, the decoding apparatus may derive the planar mode as the intra prediction mode of the current block (based on the not-planar flag) or derive a candidate indicated by the MPM index among the MPM candidates in the MPM list as the intra prediction mode of the current block. As another example, when the MPM flag has a value of 0, the decoding apparatus may derive an intra prediction mode indicated by the remaining intra prediction model information among other intra prediction modes that are not included in the MPM list and the planar mode as the intra prediction mode of the current block. Meanwhile, as still another example, when an intra prediction type of the current block is a specific type (e.g., LIP, MRL, ISP, etc.), the decoding apparatus may derive the planar mode or the candidate indicated by the MPM index in the MPM list as the intra prediction mode of the current block without checking the MPM flag.

For example, the not-planar flag may be signaled when MRL is not applied to the current block (i.e., when intra_luma_ref_idx == 0), and the not-planar flag may be omitted when MRL is applied to the current block (i.e., when intra_luma_ref_idx !== 0). When the not-planar flag is omitted, the decoding apparatus may estimate that the not-planar flag has a value of 1.

Meanwhile, intra prediction modes may include two directional intra prediction modes and 65 directional prediction modes. The non-directional intra prediction modes may include the planar intra prediction mode and a DC intra prediction mode, and the directional intra prediction modes may include intra prediction modes 2 to 66. Extended directional intra prediction may be applied to blocks with any size and applied to both luma components and chroma components.

Meanwhile, intra prediction modes may include a cross-component linear model (CCLM) mode for chroma samples in addition to the foregoing intra prediction modes. The CCLM modes may be classified as LT_CCLM, L_CCLM, and T_CCLM depending on whether left samples, top samples, or samples on both sides are taken into consideration to derive LM parameters. The CCLM modes may be applied to only chroma components.

For example, intra prediction modes may be indexed as shown in Table 1 below.

[Table 1]

| Intra prediction mode | Associated name |
|---|---|
| 0 | INTRA_PLANAR |
| 1 | INTRA_DC |
| 2..66 | INTRA_ANGULAR2.. INTRA_ANGULAR66 |

(continued)

| Intra prediction mode | Associated name |
|---|---|
| 81..83 | INTRA_LT_CCLM, INTRA_L_CCLM, INTRA_T_CCLM |

Meanwhile, the intra prediction type (or additional intra prediction mode, etc.) may include at least one of LIP, position-dependent intra prediction (PDPC), MRL, ISP, and MIP described above. The intra prediction types may be indicated on the basis of intra prediction type information, which may be generated in various forms. As an example, the intra prediction type information may include intra prediction type index information indicating one of the intra prediction types. As another example, the intra prediction type information may include at least one of reference sample line information (e.g., intra_luma_ref_idx) indicating whether MRL is applied to the current block and which reference sample line is used when MRL is applied, ISP flag information (e.g., intra_subpartitions_mode_flag) indicating whether ISP is applied to the current block, ISP type information (e.g., intra_subparititions_split_flag) indicating partition types of sub-partitions when ISP is applied, and flag information indicating whether PDPC is applied or flag information indicating whether LIP is applied. In addition, the intra prediction type information may include an MIP flag (also referred to as "intra_mip_flag") indicating whether MIP is applied to the current block. Meanwhile, when MIP is applied to the current block (e.g., when intra_mip_flag has a value of 1) as described above, an MPM list for MIP may be separately constructed, and an MPM flag, an MPM index, and remaining intra prediction mode information that may be included in intra prediction mode information for MIP may be referred to as "intra_mip_mpm_flag," "intra_mip_mpm_idx," and "intra_mip_mpm_remainder," respectively.

In addition, a variety of prediction modes may be used for MIP, and a matrix and offset for MIP may be derived in accordance with an intra prediction model for MIP. As described above, the matrix may be referred to as a (MIP) weight matrix, and the offset may be referred to as a (MIP) offset vector or a (MIP) bias vector. The number of intra prediction modes for MIP may be set differently on the basis of a size of the current block. For example, i) when a height and width of the current block (e.g., a coding block (CB) or a transform block (TB)) are 4, 35 intra prediction modes (i.e., intra prediction modes 0 to 34) may be available, ii) when both the height and width of the current block are 8 or less, 19 intra prediction modes (i.e., intra prediction modes 0 to 18) may be available, and iii) in other cases, 11 intra prediction modes (i.e., intra prediction modes 0 to 10) may be available. For example, when the case where the height and width of the current block are 4 is block size type 0, the case where both the height and width of the current block are 8 or less is block size type 1, and other cases are block size type 2, the number of intra prediction modes for MIP may be determined as shown in the following table. However, this is illustrative, and the number of block size types and the number of available intra prediction modes may be changed. In the present document, an intra prediction mode for MIP may be referred to as MIP intra prediction mode, MIP prediction mode, or MIP mode.

[Table 2]

| block size type (MipSizeId) | number of MIP intra prediction modes | MIP intra prediction mode |
|---|---|---|
| 0 | 35 | 0...34 |
| 1 | 19 | 0...18 |
| 2 | 11 | 0...10 |

Meanwhile, a secondary MPM (SMPM) list has been introduced in an enhanced compression model (ECM). An existing primary MPM (PMPM) list is composed of six entries, and a SMPM list includes 16 entries. After a general MPM list with 22 entries is generated first, the first six entries in the general MPM list are included in the PMPM list, and the other entries are included in the SMPM list. The first entry in the general MPM list is the planar mode, and the other entries include intra modes of left (L), above (A), bottom-left (BL), above-right (AR), and above-left (AL) neighboring blocks, directional modes to which offsets are added from the first two available directional modes of the neighboring blocks, and a default mode. When the coding unit (CU) block is in a vertical direction, the order of neighboring blocks may be above (A), left (L), bottom-left (BL), above-right (AR), and above-left (AL) neighboring blocks. Otherwise, the order is left (L), top (A), bottom-left (BL), above-right (AR), and above-left (AL) neighboring blocks.

When a PMPM flag is parsed and a value of the PMPM flag is 1, a PMPM index is parsed to determine which entry of the PMPM list is selected. Otherwise, an SPMPM flag is parsed to determine whether to parse an SPMPM index or remaining modes.

Deriving neighboring reference sample

When intra prediction is applied to the current block, neighboring reference samples to be used for intra prediction of the current block may be derived. The neighboring reference samples of the current block may include a sample adjacent to a left boundary of the current block with a size of nW×nH and a total of 2×nH samples neighboring a bottom-left side, a sample neighboring a top boundary of the current block and a total of 2×nW samples neighboring a top-right side, and one sample neighboring a top-left side of the current block. Alternatively, neighboring reference samples of the current block may include top-side neighboring samples of a plurality of columns and left-side neighboring samples of a plurality of rows. In addition, the neighboring reference samples of the current block may include a total of nH samples adjacent to a right boundary of the current block with a size of nW×nH, a total of nW samples adjacent to a bottom boundary of the current block, and one sample neighboring a bottom-right side of the current block.

Meanwhile, when MRL which will be described below is applied, reference samples may be located in line 1 to line 3 rather than line 0 adjacent to the current block on the left/top sides. In this case, the number of neighboring reference samples may further increase. The detailed areas and number of neighboring reference samples will be described below.

Meanwhile, when ISP which will be described below is applied, the neighboring reference samples may be derived for each sub-partition.

Some of the neighboring reference samples of the current block may not have been decoded yet or may be unavailable. In this case, the decoder may construct neighboring reference samples which will be used for prediction through interpolation of available samples.

Some of the neighboring reference samples of the current block may not have been decoded yet or may be unavailable. In this case, the decoder may construct neighboring reference samples which will be used for prediction through extrapolation of available samples. While reference samples from a bottom-left reference sample to a top-right reference sample are updated with last available samples, pixels that have not been decoded or are unavailable may be substituted or padded with last available samples.

Deriving prediction sample based on intra prediction mode/type

The prediction unit of the encoding apparatus/decoding apparatus may derive a reference sample according to the intra prediction mode of the current block among neighboring reference samples of the current block and generate a prediction sample of the current block on the basis of the reference sample.

For example, (i) a prediction sample may be derived on the basis of an average of the neighboring reference samples of the current block or interpolation based on the neighboring reference samples, and (ii) the prediction sample may be derived on the basis of a reference sample that is present in a specific (prediction) direction from a prediction sample among the neighboring reference samples of the current block. The case of (i) may be referred to as a non-directional mode or non-angular mode, and the case of (ii) may be referred to as a directional mode or an angular mode. In addition, the prediction sample may be generated through interpolation between a second neighboring sample and a first neighboring sample which are present in the opposite direction to a prediction direction of the intra prediction mode of the current block among the neighboring reference samples. The above case may be referred to as LIP. In addition, a temporary prediction sample of the current block may be derived on the basis of filtered neighboring reference samples, and a weighted sum of at least one reference sample derived in accordance with the intra prediction mode among the existing neighboring reference samples, that is, unfiltered neighboring reference samples, and the temporary prediction sample may be calculated to derive a prediction sample of the current block. This case may be referred to as PDPC. In addition, a reference sample line with the highest prediction accuracy may be selected from multiple reference sample lines neighboring the current block, and a reference sample which is present in a prediction direction from the selected reference sample line may be used to derive a prediction sample. Here, intra prediction encoding may be performed by transmitting (signaling) information on the used reference sample line to the decoding apparatus. This case may be referred to as MRL intra prediction or MRL-based intra prediction. In addition, the current block may be divided into vertical or horizontal sub-partitions, and intra prediction may be performed on the basis of the same intra prediction mode. Here, neighboring reference samples may be derived and used for each of the sub-partitions. In other words, in this case, an intra prediction mode of the current block uniformly applies to the sub-partitions, and neighboring reference samples are derived and used for each of the sub-partitions such that intra prediction performance can be improved in some cases. This prediction method may be referred to as ISP or ISP-based intra prediction. Details thereof will be described below. In addition, when a prediction direction based on a prediction sample indicates between neighboring reference samples, that is, when the prediction direction indicates a fractional sample position, a prediction sample value may be derived through interpolation of a plurality of reference samples that are present around the prediction direction (around the fractional sample position).

The above-described intra prediction methods may be referred to as intra prediction types distinguishably from intra prediction modes. The intra prediction types may be referred to by various terms, such as intra prediction techniques, additive intra prediction modes, or the like. For example, the intra prediction types (or additive intra prediction modes, etc.) may include at least one of LIP, PDPC, MRL, and ISP described above. Information on the intra prediction types may be encoded by the encoding apparatus, included in a bitstream, and signaled to the decoding apparatus. The information on the intra prediction types may be implemented in various forms such as flag information indicating whether each intra prediction type is applied, index information indicating one of several intra prediction types, and the like.

An MPM list for deriving the above-described intra prediction modes may be generated differently depending on the intra prediction types. Alternatively, the MPM list may be generated in common irrespective of the intra prediction types.

Deriving neighboring reference samples

When intra prediction is applied to the current block, neighboring reference samples to be used for intra prediction of the current block may be derived. The neighboring reference samples of the current block may include a sample adjacent to a left boundary of the current block with a size of nW×nH and a total of 2×nH samples neighboring a bottom-left side, a sample adjacent to a top boundary of the current block and a total of 2×nW samples neighboring a top-right side, and one sample adjacent to a top-left side of the current block. Alternatively, the neighboring reference samples of the current block may include top-side neighboring samples of a plurality of columns and left-side neighboring samples of a plurality of rows. In addition, the neighboring reference samples of the current block may include a total of nH samples adjacent to a right boundary of the current block with a size of nW×nH, a total of nW samples adjacent to a bottom boundary of the current block, and one sample neighboring a bottom-right side of the current block.

Meanwhile, when MRL is applied, reference samples may be located in line 1 to line 3 rather than line 0 adjacent to the current block on the left/top sides. In this case, the number of neighboring reference samples may further increase. The detailed areas and number of neighboring reference samples will be described below.

Meanwhile, when ISP is applied, the neighboring reference samples may be derived for each of sub-partitions.

Decoder side intra mode derivation (DIMD)

In a DIMD mode, intra prediction mode information may not be directly transmitted but may be derived and used by an encoder and a decoder. First, a horizontal gradient and a vertical gradient are acquired from a second neighboring sample column and row, and a histogram of gradients (HoG) may be built therefrom.

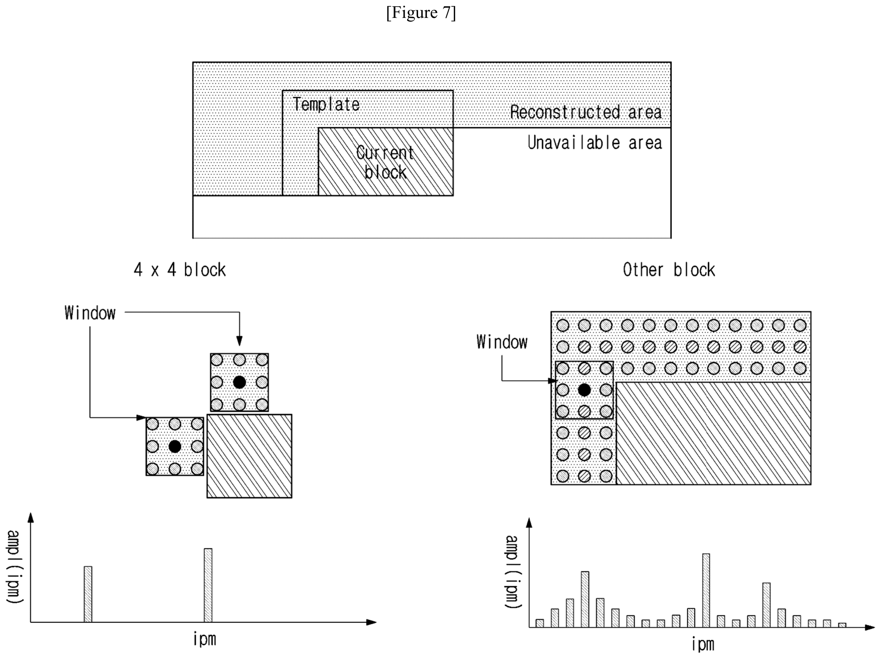

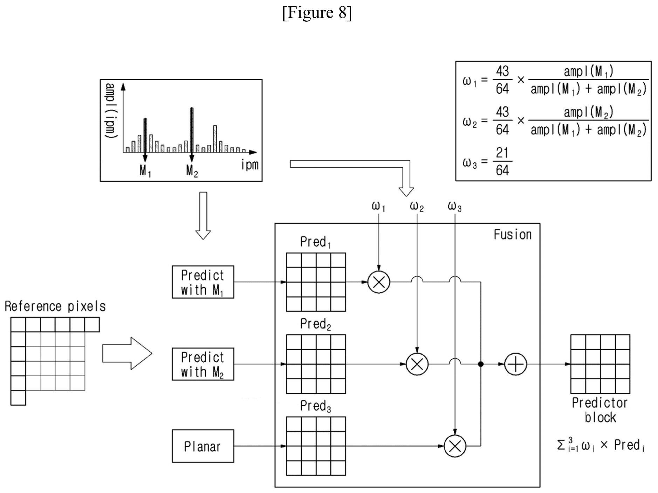

FIG. 7 is a diagram illustrating a method of building a DIMD HoG, and FIG. 8 is a diagram illustrating a method of configuring a prediction block in a DIMD mode. HoGs may be built as shown in FIG. 7. An HoG may be built by applying a Sobel filter using L-shaped rows and columns of three neighboring pixels of the current block. When boundaries of the block are present in different coding tree units (CTUs), the block is not used for texture analysis.

Subsequently, as shown in FIG. 7, two intra modes with the largest histogram amplitudes may be selected, and then a prediction block which is predicted using the selected intra modes, and the planar mode may be blended together to generate a final prediction block. Weights may be derived from amplitudes of the histogram. Also, a DIMD flag may be transmitted for each block to determine whether to use DIMD.

In DIMD, intra prediction may be derived as a weighted average of the planar mode and two derived directions. To this end, two angular modes are selected from the HoG calculated from the neighboring pixels of the current block. When the two modes are selected, predictors (prediction blocks) and a planar predictor thereof are calculated normally, and then a corresponding weighted average may be used as a final predictor (final prediction block) of the current block. Here, to determine weights, corresponding amplitudes in the HoG are used for each of the two modes.

Derived intra modes are included in a primary list of intra MPM, and thus a DIMD process may be performed before an MPM list is generated. A primarily derived intra mode of a DIMD block is stored with the block and is used for generating MPM lists of neighboring blocks.

A DIMD chroma mode may employ a DIMD derivation method to derive a chroma intra prediction mode of the current block on the basis of previously reconstructed neighboring Y, Cb, and Cr samples in neighboring rows and columns. Specifically, to build an HoG, horizontal gradients and vertical gradients may be calculated for not only previously reconstructed Cb and Cr samples but also collocated reconstructed luma samples of each current chroma block. Subsequently, an intra prediction mode with the largest histogram amplitude value is used for performing chroma intra prediction of the current chroma block.

When an intra prediction mode derived from the DIMD chroma mode is the same as the intra prediction mode derived from a direct mode (DM), an intra prediction mode with the second largest histogram amplitude value is used as the DIMD chroma mode. A certain CU level flag may be signaled to indicate whether the foregoing DIMD chroma mode is applied.

Fusion for template-based intra mode derivation (TIMD)

Sums of absolute transformed difference (SATDs) between a prediction sample of a template and a reconstructed sample may be calculated for each intra prediction mode in the MPM list. Then, two intra prediction modes with the two lowest SATDs may be selected as TIMD modes. The two TIMD modes may be fused with weights, and this weighted intra prediction is used to encode a current CU. The PDPC described above may be involved in deriving a TIMD mode.

Costs of the two selected modes are compared with a certain threshold, and two cost factors may be applied as shown in expression 1 below.

[Expression 1]

$$costMode2 < 2 * costMode1$$

When expression 1 is true, the above-described fusion may be applied. On the other hand, when expression 1 is false, only mode 1 may be used.

Meanwhile, weights of the modes may be calculated from each of SATD costs as shown in expression 2 below.

[Expression 2]

$$weight1 = costMode2 / (costMode1 + costMode2)$$

$$weight2 = 1 - weight1$$

Intra template matching prediction (intraTMP)

IntraTMP
is a special prediction mode for copying the best prediction block from a reconstructed part of a current frame, whose L-shaped template corresponds to a current template. Within a predefined search range, the encoder searches for the most similar template to the current template in a reconstructed part of the current frame and uses the corresponding block as a prediction block. Subsequently, the encoder signals whether the corresponding mode is used, and the same prediction operation may be performed at the decoder side.

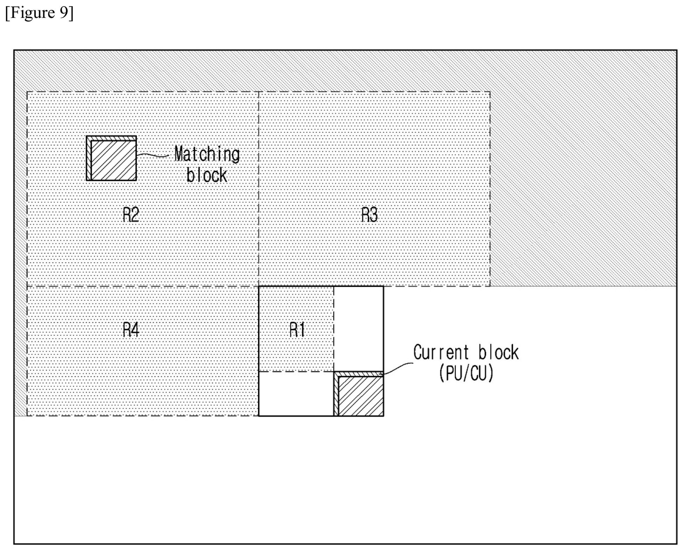

FIG. 9 is a diagram illustrating an intra template matching search area in use.

A prediction signal may be generated by matching an L-shaped causal neighbor of a current block with another block in a predefined search area in FIG. 9. In FIG. 9, R1 is a current CTU, R2 is a top-left CTU, R3 is a top CTU, and R4 is a left CTU. A sum of difference (SAD) is used as a cost function. In each region, the decoder searches for a template with the smallest SAD for the current block and uses a corresponding block, that is, a reference block, as a prediction block. The dimensions (SearchRange w, SearchRange h) of all regions are set proportional to the block dimension (BlkW, BlkH) to perform a fixed number of SAD comparisons per pixel. This may be performed as follows:

[Expression 3]

$$SearchRange_w = a * BlkW$$

$$SearchRange_h = a * BlkH$$

Here, "a" is a constant for controlling the gain/complexity trade-off.

"a" may be 5.

To speed up the template matching process, the search range of all search regions is subsampled by a factor or 2. This leads to a reduction of template matching search to 4. After the best match is found, a refinement process is performed. The refinement is done through a second template matching search around the best match using a reduced range. Here, the reduced range is defined as min(BlkW, BlkH)/2.

An intra template matching tool may be activated for CUs with a size of 64 or less in width and height. The maximum CU size for intra template matching is configurable. An intraTMP mode is signaled at a CU level through a dedicated flag when DIMD is not used for a current CU.

The present disclosure proposes a method of deriving a reference block of an intraTMP mode and an intra mode when intra-frame encoding is performed on a still image or a video, and a final prediction block is predicted through various prediction block combination methods. Accordingly, it is possible to expect an improvement in prediction performance and thus increase coding efficiency.

According to an embodiment of the present disclosure, an intra mode derived through TIMD/DIMD can be combined with a reference block of an intraTMP mode. Also, according to an embodiment of the present disclosure, multiple intra modes derived through TIMD/DIMD can be combined with a prediction block of an intraTMP mode. Also, according to an embodiment of the present disclosure, an intra mode can be derived through TIMD/DIMD using the same shape as the template shape. Also, according to an embodiment of the present disclosure, it is possible to improve signaling of intraTMP, manage various intraTMP modes in the form of a list, and generate a prediction block of intraTMP in a variety of ways.

The above embodiments will be described in detail below with reference to the drawings.

Embodiment 1

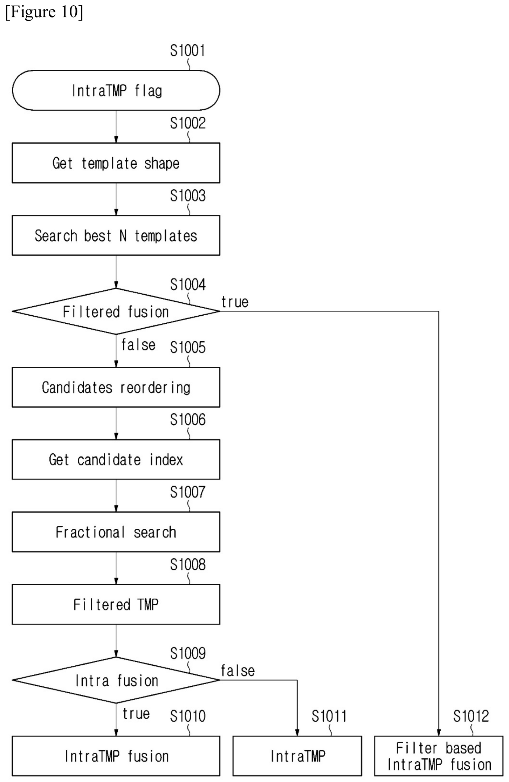

FIG. 10 is a diagram illustrating an image coding method based on an intraTMP mode according to an embodiment of the present disclosure. The present embodiment proposes a method of generating a new prediction block by combining a prediction block generated through intraTMP (i.e., a corresponding block in intraTMP) and a prediction block generated using an intra mode derived through DIMD or TIMD. Since the prediction block acquired by combining the prediction blocks can improve intra prediction performance, a technology for generating a plurality of prediction blocks on the basis of the DIMD technology and TIMD technology will be described according to an embodiment of the present disclosure. A prediction block is generated using an intra mode derived through DIMD or TIMD and combined with a prediction block generated using the intraTMP to generate a final prediction block, thus improving intra prediction performance.

Referring to an intraTMP mode process of FIG. 10, when an intraTMP flag step S1001 is performed by an image decoding apparatus, that is, in the case of an image decoding process, this may correspond to a step of acquiring an intraTMP flag first or deriving a value of the corresponding flag. However, when the intraTMP flag step S1001 is performed by the image decoding apparatus, an image encoding process may correspond to a step of generating an intraTMP flag by determining whether intraTMP is applied. In determining whether to apply an intraTMP mode in step S1001, when it is determined, that is, selected, to apply intraTMP, steps S1002 to S1012 may be performed. Each step will be described below, but each of the following steps may be omitted according to another embodiment of the present disclosure. The order of steps may be changed, and some steps may be added. In addition, the steps and the order of signaling information may be changed.

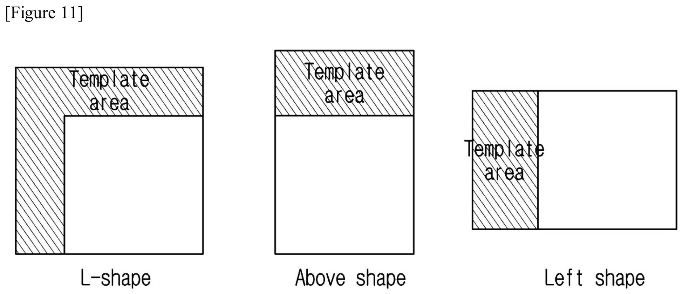

After it is determined to apply intraTMP, a template shape, that is, a template position, may be derived (Get template shape) (S1002). For example, step S1002 may correspond to a process of deriving one template shape (template position) among a plurality of template positions, that is, template shapes. For example, various template shapes may exist including the examples shown in FIG. 9. FIG. 11 is a set of diagrams illustrating template shapes applicable to an embodiment of the present disclosure. For example, template shapes applicable to the present disclosure may include an L-shape, an above shape, a left shape, and the like. Template shapes may be explicitly signaled (e.g., template shape information, a template shape index for a template shape list, etc.) through a bitstream, or a predefined shape may be used in accordance with a promise between the encoder and decoder without signaling under a specific condition (e.g., a block size, etc.). In addition, as another example, a template shape may be derived on the basis of other information.

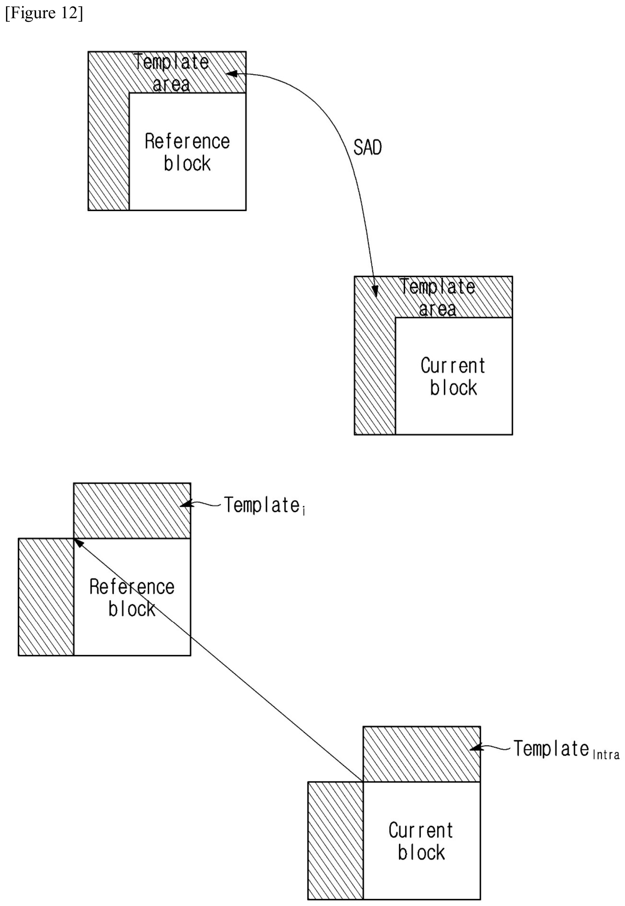

When the template shape is determined, an optimal template may be searched for (search best N templates) (S1003). For example, in step S1003, one or more optimal templates may be searched for. Also, for example, N positions may be searched for in increasing order of error (e.g., cost, etc.) through a template search to determine an optimal template. FIG. 12 is a set of diagrams illustrating a template search method and an error calculation method that are applicable to an embodiment of the present disclosure. For example, according to the template search method, errors (e.g., SADs) may be calculated between a template area neighboring the current block and template areas neighboring a reference block as shown in FIG. 12, and N (N is an integer) template positions may be found in increasing order of error value (e.g., cost, etc.) to determine optimal template shapes. Meanwhile, this corresponds to an embodiment of the present disclosure, and to calculate an error between a template area neighboring the current block and template areas neighboring a reference block, various error calculation methods including SATD, SSE, MR-SAD, MR-SSE, MR-SATD, etc., may be used. It is obvious that cases where error calculation methods other than those are used are included in the present disclosure. In particular, the encoder may determine information on an error value and explicitly signal the information to the decoder side. However, an error value may be derived at the decoder side in accordance with a predefined promise under a specific condition using a certain method, or an error calculation method may be derived on the basis of other information, which is also included in the present disclosure.

Subsequently, it may be determined whether filtered fusion is applied (S1004). For example, when the example of FIG. 10 is performed at the encoder side, step S1004 may include a step of determining whether filtered fusion is applied and encoding whether filtered fusion is applied, as information (e.g., in the form of a flag). Meanwhile, for example, when the example of FIG. 10 is performed at the decoder side, step S 1004 may include a step of determining whether filtered fusion is applied, in which whether filtered fusion is applied is decoded as information (e.g., in the form of a flag) from a bitstream. Meanwhile, as another example, whether filtered fusion is applied may not be acquired from a bitstream but may be derived from other information or derived as a specific value under a predefined condition.

Subsequently, when filtered fusion is not applied (e.g., when a filtered fusion flag has a value of false (0) on the decoding side), template position candidates may be reordered (Candidates reordering) (S1005). In operation S1005, N reference block candidates derived from the N optimal templates acquired through the template search may be reordered to improve fusion performance. The N reference block candidates may be managed as a reference block list, and the list may be reordered. For example, when a specific reference block candidate is fused with an intra prediction block generated using a specific intra mode, the candidates may be reordered. For example, each of the reference block candidates may be fused with a specific intra mode, and a weight of w or 1-w may be applied to each block. Weights applied to the blocks may be the same value or different values, and error values (e.g., $Cost_i$) may be calculated through fusion based on the weights. Subsequently, the candidates may be reordered in increasing order of error value (e.g., cost). For example, fusion of the blocks may be performed on the basis of expression 4 below.

[Expression 4]

$$Cost_i = SAD(ReconSamples, w \times Template_i + (1-w) \times Template_{Intra})$$

For example, as shown in expression 4 above, an error (e.g., cost) calculated through block fusion may be derived on the basis of previously reconstructed samples ReconSamples, that is, previously reconstructed samples of template areas neighboring the current block. Also, as shown in expression 4, an error (e.g., cost) calculated through block fusion may be derived on the basis of a previously reconstructed sample Template$_i$ of a template area neighboring an $i^{th}$ reference block candidate. Also, as shown in expression 4, an error (e.g., cost) calculated through block fusion may be derived on the basis of a prediction sample Template$_{Intra}$ that is generated for a template neighboring the current block using an intra mode. In expression 4, i may be an integer satisfying 0<=i<N, w may be a real number, and SAD(a, b) may be a sum-of-difference function representing an SAD between block a and block b. Meanwhile, as described above, SAD(a, b) may be replaced with another error calculation function. For example, the previously reconstructed sample Template$_i$ and the prediction sample Template$_{Intra}$ generated using an intra mode may be derived in a similar way to what is shown in FIG. 12. Meanwhile, for example, the weight w of Expression 4 may be the same as a weight w for generating a final prediction block in an intraTMP fusion step S1010. Also, for example, the intra mode for generating Template$_{Intra}$ of Expression 4 may be the same as an intra mode used for generating an intra prediction block in the intraTMP fusion step S1010. As an example, when intra modes p and q are used in the intraTMP fusion step S1010 to generate an intra prediction block, intra modes p and q may be used for generating Template$_{Intra}$. Meanwhile, according to an embodiment, reordering may be performed on the list including blocks generated by combining reference block candidates with an intra prediction block and general blocks that are not generated through such combination. For example, with respect to k reference block candidates, a reordered candidate list may include k fusion blocks and k non-fusion reference blocks on the basis of a reference block and blocks generated using an intra mode. An example of the reordered candidate list may be the same as shown in Expression 5 below.

[Expression 5]

$$Reordering\ candidate\ list = \{$$

$$a_1, a_2, \ldots, a_k,$$

$$(a_1, IntraMode), (a_2, IntraMode), \ldots, (a_k, IntraMode)\}$$

For example, in Expression 5, ai, $a_2$, ..., and $a_k$ may be k non-fusion reference block candidates. Also, ($a_1$, IntraMode), ($a_2$, IntraMode), ..., and ($a_k$, IntraMode) may represent reference block candidates fused with a block generated using a specific intra mode. IntraMode may be an intra prediction mode derived through TIMD, DIMD or the like. k is a real number, for example, 8. Meanwhile, when several intra modes are derived through TIMD or DIMD, a reordered candidate list may be derived as follows.

[Expression 6]

$$Reordering\ candidate\ list = \{$$

$$a_1, a_2, \ldots, a_k,$$

$$(a_1, IntraMode_1), (a_2, IntraMode_1), \ldots, (a_k, IntraMode_1),$$

$$(a_1, IntraMode_2), (a_2, IntraMode_2), \ldots, (a_k, IntraMode_2),$$

...,

$$(a_1, IntraMode_p), (a_2, IntraMode_p), \ldots, (a_k, IntraMode_p)\}$$

According to expression 6, a plurality of derived intra prediction modes may be included in the reordered candidate list, and the plurality of intra prediction modes may be derived through TIMD, DIMD, or the like. p is a real number, for example, 2, and combinations of derived intra prediction modes and reference blocks may be derived on the basis of a product of the number of reference blocks and the number of derived intra prediction modes. Candidate blocks in the reordered candidate list may be ordered in increasing order of the error (e.g., cost) described above. For example, an error may be acquired as follows.

(1) In the case of a block candidate generated by combining a reference block candidate with an intra mode, an error value is derived according to expression 4.
(2) In the case of a reference block candidate combined with no intra mode, an error value is derived on the basis of the sum of errors (e.g., SAD) between template areas neighboring the current block and template areas neighboring the reference block.

For example, to derive and compare error values, samples in template areas used in (1) and (2) may be identical. Meanwhile, as an example, when a reference block candidate combined with an intra mode is included in the reordered candidate list, signaling of an intra fusion flag may be omitted. When the signaling of an intra fusion flag is omitted, a block candidate with the smallest error value may be finally selected from the reference block candidate list reordered in increasing order of error value. As another example, a block candidate selected in accordance with a candidate index may be selected. Here, block candidates may include block candidates generated by combining reference block candidates with intra modes and reference block candidates combined with no intra mode.

Subsequently, a reference block candidate may be determined in the reference block list on the basis of the candidate index (S 1006). Meanwhile, the reference block candidate may be acquired on the basis of the candidate index signaled from the encoder to the decoder. For example, when FIG. 10 is performed at the encoder side, step S1006 may include a step of determining a reference block candidate and determining a reference block candidate index, and the reference block candidate index may be coded as a bitstream and signaled. For example, when FIG. 10 is performed at the decoder side, step S1006 may include a step of acquiring a candidate index (Get candidate index). On the decoder side, the reference block candidate may be one of the N reference block candidates selected on the basis of signaled information. For example, information for selecting a reference block candidate may be signaled such that one of K candidates with smallest error values may be selected from among N candidates with small error values derived on the basis of SAD. Here, as an example, N may be 8, and K may be 4 (K is an integer, K<=N). Meanwhile, this step may be omitted, and when this step is omitted, a reference block with the smallest SAD may be selected through an intraTMP template search. Otherwise, when signaling of candidate information is omitted in the current step, a block with the smallest error (e.g., derived using SADs) may be selected in accordance with the order of the reference block candidate list reordered on the basis of expression 4 above.

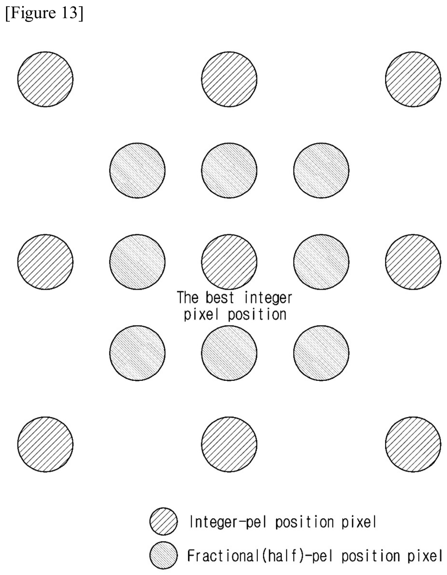

Subsequently, a fractional search may be performed (S1007). The fractional search step may be performed on the basis of whether to search for a sub-pel. Whether to search for a sub-pel may be determined by the encoder and signaled to the decoder side, and the decoder may perform the current step on the basis of the information signaled from the encoder. Otherwise, as another example, information about whether to search for a sub-pel may be derived at the decoder side on the basis of rules predefined between the encoder and decoder rather than explicitly signaled information under a specific condition, and may also be derived on the basis of other information. For example, when a sub-pel search is performed, a half-pel search may be additionally performed around the corresponding reference block on the basis of the reference block selected in the previous step S1006 as shown in FIG. 13 such that a block vector position may be improved to a position with the smallest error (N is an integer). FIG. 13 is a diagram illustrating a half-pel search method applicable to an embodiment of the present disclosure. Meanwhile, a half-pel search is one example according to the present disclosure, and a position of a sub-pel may be 1/4, 1/2, or 3/4. In addition, information about in which direction a sub-pel search will be performed may be explicitly signaled as a bitstream. For example, in the drawing, the information may indicate one of left-top, top, top-right, left, right, left-bottom, bottom, bottom-right, etc., on the basis of the best integer pixel position. Meanwhile, as another example, the information about in which direction a sub-pel search will be performed may be derived without explicit signaling. For example, with respect to the left-top, top, top-right, left, right, left-bottom, bottom, and bottom-right positions on the basis of the best integer pixel position in FIG. 13, errors between template areas neighboring the current block and template areas neighboring a reference block may be calculated to derive a position with the smallest error without any signaled information. Meanwhile, when the corresponding position derivation is performed at the decoder side without information, rules may be previously defined between the encoder and decoder sides. The rules may be based on whether a specific condition is satisfied, and the corresponding position derivation may be performed on the basis of other information. As an example, SATD, SSE, MR-SAD, MR-SSE, MR-SATD, etc., may be used as an error calculation method.

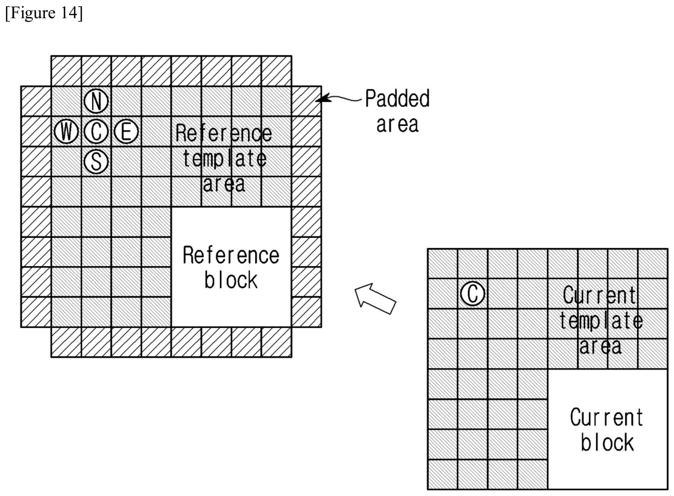

Subsequently, TMP filtering may be performed (Filtered TMP) (S1008). As shown in FIG. 14, the TMP filtering may include a process of applying a filter on the basis of a filter coefficient that is trained to minimize a mean squared error (MSE) between a current template area and a reference template area. FIG. 14 is a diagram illustrating a TMP filtering process applicable to an embodiment of the present disclosure. For example, application of the filter may be based on expression 7 below. Whether to apply the filter may be determined by the encoder and signaled to the decoder side through a bitstream. However, information about whether to apply the filter may be derived at the decoder side in accordance with rules predefined between the encoder and decoder without information signaling or derived on the basis of other information, or the filter may be applied under only a specific condition.

[Expression 7]

$$Output_i = c0 * C + c1 * N + c2 * S + c3 * E + c4 * W + c5 * B$$

In the above expression 7, $Output_i$ may be an $i^{th}$ sample of the current block, and c0, c1, c2, c3, c4, and c5 may be filter coefficients for TMP filtering, C may be a sample at the same position as $Output_i$ in the reference block, N may be a top sample adjacent to C, and S may be a bottom sample adjacent to C. Also, W may be a left sample adjacent to C, E may be a right sample adjacent to C, and B may be a bias term, which may have a value of, for example, (1<<(bit depth-1)).

Subsequently, it may be determined whether to perform intra fusion (S1009). For example, when the example of FIG. 10 is performed at the encoder side, step S1009 may include a step of determining whether to perform intra fusion. Whether to perform intra fusion may be encoded as a bitstream information and signaled or may not be signaled but may be derived as a specific value at the decoder side under a predefined condition. For example, when the example of FIG. 10 is performed at the decoder side, step S 1009 may include a step of determining whether to perform intra fusion, in which whether to perform intra fusion is determined on the basis of information which is signaled using a bitstream.

Meanwhile, when an intra fusion flag is a specific value (e.g., 1, true), intraTMP fusion may be performed (S1010). Also, in the corresponding step, a prediction block predicted in an intra mode and an intraTMP reference block may be combined. For example, the intraTMP reference block may be a reference block at a block vector position with the smallest template error (e.g., template cost). Alternatively, the intraTMP reference block may be a block with the smallest template error (e.g., template cost) that is reordered in the candidate reordering step S1005. Alternatively, the intraTMP reference block may be a reference block at a block vector position indicated by a candidate index. This may be information signaled using a bitstream as described above. Alternatively, the intraTMP reference block may be a block to which a filter is applied in the filtered TMP step S1008. Alternatively, the intraTMP reference block may be a reference block at a block vector position refined in the fractional search step S1007. Alternatively, the intraTMP reference block may be a reference block selected in accordance with a combination of all or some of the cases. For example, the intraTMP reference block may be a reference block to which both the filtered TMP step S1008 and the fractional search step S1007 are applied.

As an embodiment, a final prediction block may be generated as shown in the following expression.

[Expression 8]

$$Pred_{final} = (w_0 \times Pred_{TMP} + w_1 \times Pred_{Intra} + (1 \ll s-1)) \gg s$$

For example, $Pred_{final}$ may be a final prediction block, $Pred_{TMP}$ may be the intraTMP reference block, $Pred_{Intra}$ may be a prediction block generated in an optimal prediction mode (best mode) derived through TIMD or DIMD, s may be an integer, $w_0$ and $w_1$ may be real numbers, and $w_0 + w_1$ may be equal to 2s. For example, $w_0$ and $w_1$ of expression 8 may be derived on the basis of template errors. As an example, a template error between a previously reconstructed sample in a template area adjacent to the intraTMP reference block and a previously reconstructed sample in a template area adjacent to the current block may be referred to as TmpCost. Also, a prediction sample may be generated in a template area neighboring the current block in an optimal mode derived through TIMD or DIMD, and a template error may be acquired between the prediction sample and a previously reconstructed sample in a template area neighboring the current block. This may be referred to as IntraCost. Accordingly, $w_0$ and $w_1$ may be derived at the following ratio.

$$w0:w1 = \frac{IntraCost}{IntraCost + TmpCost} : \frac{TmpCost}{IntraCost + TmpCost}$$

TmpCost and IntraCost may be acquired using SAD, SATD, SSE, MRSAD, MRSSE, MRSATD, or the like. Meanwhile, for example, the weight derivation may be performed when the following condition is satisfied.
[Expression 9]

$$TmpCost < IntraCost \&\& TmpCost \neq 0$$

Meanwhile, for example, when the condition is not satisfied, fixed values may be used as the weights as shown below.

[Expression 10]

$$w_0 = k$$

$$w_1 = 16 - k$$

As an example, in the above expression 10, k may be, for example, 13.
According to another embodiment, the intraTMP reference block may be at a long distance from the current block, and this may be taken into consideration to compensate for an error. For example, a real number $\alpha$ may be multiplied by TmpCost, and an error-based weight may be derived using $\alpha \times$ TmpCost and IntraCost. For example, $\alpha$ may be 0.186. This is a mere example, and $\alpha$ may have other values. As an example, the weights $w_0$ and $w_1$ may be derived at the following ratio.

$$w0:w1 = \frac{IntraCost}{IntraCost + \alpha \times TmpCost} : \frac{\alpha \times TmpCost}{IntraCost + \alpha \times TmpCost}$$

For example, an $\alpha$ value multiplied by TmpCost may vary depending on a size (the number of pixels) of the current block. As an example, the $\alpha$ value may be 0.228 (16 pixels), 0.211 (32 pixels), 0.194 (64 pixels), 0.174 (128 pixels), 0.154 (256 pixels), 0.145 (512 pixels), or 0.135 (1024 pixels). These are mere examples, and $\alpha$ may have other values. In this case, the weights $w_0$ and $w_1$ may be derived at the following ratio.

$$w0:w1 = \frac{IntraCost}{IntraCost + \alpha \times TmpCost} : \frac{\alpha \times TmpCost}{IntraCost + \alpha \times TmpCost}$$

For example, the $\alpha$ value multiplied by TmpCost may vary depending on a quantization parameter (qp). As an example, when the qp is 22 or 27, $\alpha$ may be 0.196, and when the qp is 32 or 37, $\alpha$ may be 0.176. These are mere examples, and $\alpha$ may have other values. Here, the weights $w_0$ and $w_1$ may be derived at the following ratio.

$$w0:w1 = \frac{IntraCost}{IntraCost + \alpha \times TmpCost} : \frac{\alpha \times TmpCost}{IntraCost + \alpha \times TmpCost}$$

For example, the $\alpha$ value multiplied by TmpCost may vary depending on a template shape (e.g., a template position, etc.) of intraTMP. As an example, when the template shape is an L-shape, $\alpha$ may be 0.186, and when the template position is top or left, $\alpha$ may be 0.13. These are mere examples, and $\alpha$ may have other values. For example, the weights $w_0$ and $w_1$ may be derived at the following ratio.

$$w0:w1 = \frac{IntraCost}{IntraCost + \alpha \times TmpCost} : \frac{\alpha \times TmpCost}{IntraCost + \alpha \times TmpCost}$$

According to another embodiment, the weights applied to the above expression (e.g., $w_0$ and $w_1$) may vary depending on a size of the current block. For example, when a width and height of the current block are w and h, weights may be applied on the basis of expression 11 below.

[Expression 11]

$$if(w * h == 16)$$

$$w_0 = 54, w_1 = 10$$

$$if(w * h == 32)$$

$$w_0 = 53, w_1 = 11$$

$$if(w * h == 64)$$

$$w_0 = 52, w_1 = 12$$

$$if(w * h == 128)$$

$$w_0 = 51, w_1 = 13$$

$$if(w * h == 256)$$

$$w_0 = 50, w_1 = 14$$

$$if(w*h==512)$$

$$w_0=49, w_1=15$$

$$if(w*h==1024)$$

$$w_0=48, w_1=16$$

Meanwhile, expression 11 is a mere example for determining the weights, and the weights may have other values. In expression 11, a product of the width and height of the current block is shown as a condition for determining the weights, but the condition for determining the weights may be expressed using a range of the width or height of the current block (e.g., the width or height of the current block should be a specific value or more/less). Alternatively, the condition may only be applied to some current blocks. For example, when the width and height of the current block are w and h and w*h is 256 or more, weights may vary. As an example, weights may be derived as shown in expression 12.

[Expression 12]

$$if(w*h==256)$$

$$w_0=50, w_1=14$$

$$else\ if(w*h==512)$$

$$w_0=49, w_1=15$$

$$else\ if(w*h==1024)$$

$$w_0=48, w_1=16$$

*else*

$$w_0=52, w_1=12$$

Meanwhile, expression 12 is a mere example for determining the weights, and the weights may have other values. In expression 12, a product of the width and height of the current block is shown as a condition for determining the weights, but the condition for determining the weights may be expressed using a range of the width or height of the current block (e.g., the width or height of the current block should be a specific value or more/less).

Meanwhile, when it is determined not to apply intra fusion (e.g., including the case where a value of the intra fusion flag indicates false on the decoder side), only intraTMP may be performed (S1011). In other words, only intraTMP-based prediction blocks may be derived.

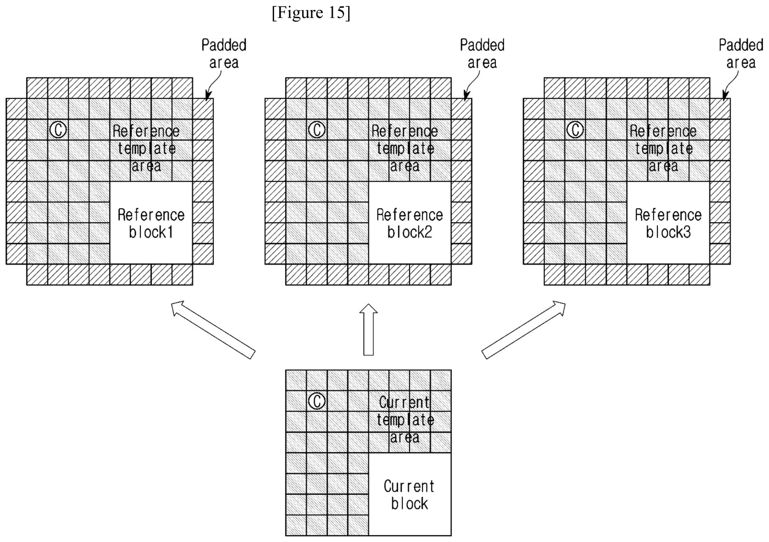

Meanwhile, when it is determined in step S1004 that filtered fusion is applied, it may be determined thereafter whether intraTMP-based filtering is applied (Filter based IntraTMP fusion) (S1012). The current step S1012 may be performed when a filtered fusion flag is a specific value (e.g., 1, true), and may be associated with the example of FIG. 15. FIG. 15 is a diagram illustrating a plurality of reference template areas according to an embodiment of the present disclosure and a current template area. According to the example shown in FIG. 15, a filter may be applied as shown in expression 13 on the basis of filter coefficients that are trained to minimize an MSE between the current template area and a plurality of reference template areas. Also, the number of fused reference blocks may be explicitly signaled as a bitstream, derived in accordance with rules predefined between the encoder and decoder, or derived on the basis of other signaled information.

[Expression 13]

$$Output_i = c_0 S_1 + c_1 S_2 + ... + c_{(n-1)} S_{(n-1)} + c_n B$$

For example, in expression 13, $Output_i$ may be an $i^{th}$ sample of the current block, and c0, c1, c2, ..., $c_{n-1}$, and $c_n$ may be filter coefficients, $S_1$ may be a sample collocated with $Output_i$ in a first reference block, $S_2$ may be a sample collocated with $Output_i$ in a second reference block, $S_3$ may be a sample collocated with $Output_i$ in a third reference block, and $S_{n-1}$ may be a sample collocated with $Output_i$ in an $(n-1)^{th}$ reference block. Also, a variable B may be a bias term, which may have a value of, for example, (1<<(bit depth-1)).

Embodiment 2

The present embodiment proposes a method of combining a prediction block generated through intraTMP and a prediction block generated in an intra mode derived through DIMD or TIMD to generate a new prediction block. According to the proposed method, multiple derived intra modes may be combined with an intraTMP reference block to further improve intra prediction performance. More specifically, as shown in the DIMD technology and TIMD technology, prediction blocks acquired by combining prediction blocks may lead to an improvement in intra prediction performance. Therefore, prediction blocks acquired by combining several prediction blocks through DIMD or TIMD may be combined with prediction blocks generated using the intraTMP technology, leading to an improvement in intra prediction performance. For example, an intraTMP reference block may be a reference block at a block vector position with the smallest template cost. Alternatively, the intraTMP reference block may be a block with the smallest template error that is reordered in the candidate reordering step of embodiment 1. Alternatively, the intraTMP reference block may be a reference block at a block vector position indicated by the candidate index of embodiment 1. The candidate index may be acquired through signaling. Alternatively, the intraTMP reference block may be a block to which a filter is applied in the filtered TMP step of embodiment 1. Alternatively, the intraTMP reference block may be a reference block at a block vector position refined in the fractional search step of embodiment 1. Alternatively, the intraTMP reference block may be a reference block selected in accordance with a combination of all or some of the cases. For example, the intraTMP reference block may be a reference block to which both filtered TMP and a fractional search are applied. As an embodiment, a final prediction block may be generated as shown in expression 14 below.

[Expression 14]

$$Pred_{final} = (w_0 \times Pred_{TMP} + w_1 \times Pred_{Intra} + (1 \ll s-1)) \gg s$$

For example, $Pred_{final}$ may be a final prediction block, $Pred_{TMP}$ may be the intraTMP reference block, and $Pred_{Intra}$ may be a prediction block acquired by combining multiple intra modes derived through TIMD or DIMD. Also, s may be an integer, $w_0$ and $w_1$ may be real numbers, and $w_0 + w_1$ may be equal to 2s.

According to an embodiment, $Pred_{Intra}$ of the above expression 14 may be a prediction block that is generated by blending multiple intra modes derived through TIMD. For example, two intra modes with the smallest error values (e.g., SATDs) may be selected in a TIMD mode, and error values (e.g., SATDs) of the two intra modes may be costMode1 and costMode2. When a condition shown in expression 15 below is satisfied, $Pred_{Intra}$ may be generated by blending prediction blocks of the two intra modes. Here, weights applicable to the intra prediction blocks may be as shown in expression 16.

[Expression 15]

$$costMode2 < 2 * costMode1$$

[Expression 16]

$$weight1 = costMode2 / (costMode1 + costMode2)$$

$$weight2 = 1 - weight1$$

Also, the prediction block that is generated by blending multiple intra modes derived through TIMD may be Template$_{Intra}$ of expression 4 in the candidate reordering step of embodiment 1. According to an embodiment, Pred$_{Intra}$ of the above expression 14 may be a prediction block that is generated by blending multiple intra modes derived using DIMD. As an example, K intra prediction modes with large histogram amplitudes may be selected in DIMD, and a final prediction block may be generated by blending prediction blocks generated on the basis of the modes. For example, K is an integer of 1 or more, and a K value may be determined as a promise between the encoder and decoder. As an example, K may be 5. When K is 5, five intra modes with large histogram amplitudes may be selected. When amplitude values of the modes are codeMode1, codeMode2, codeMode3, codeMode4, and codeMode5, six prediction blocks including the planar mode may be blended. For example, blending weight ratios may be as follows. Weight1, weight2, weight3, weight4, and weight5 are weights of a derived first intra prediction mode, second intra prediction mode, third intra prediction mode, fourth intra prediction mode, and fifth intra prediction mode, that is, correspond to a first weight, a second weight, a third weight, a fourth weight, and a fifth weight, respectively. Meanwhile, a sum of the weight ratios may be 3/4 of Pred$_{Intra}$, which may represent that 1/4 of a fixed weight may be applied as a weight of the planar mode (weightPlanar). In addition, the first weight weight1 for a first prediction block based on the first intra prediction mode may be derived on the basis of an error value (e.g., an amplitude value) of the first intra prediction mode. For example, the first weight may be derived on the basis of costMode1/(costMode1+costMode2+costMode3+costMode4+costMode5). Similarly, the second weight weight2 may be derived on the basis of an error value (e.g., an amplitude value) of the second intra prediction mode. The second weight weight2 may be derived on the basis of costMode2/(costMode1+costMode2+costMode3+costMode4+costMode5). The third weight weight3 may be derived on the basis of an error value (e.g., an amplitude value) of the third intra prediction mode. The third weight weight3 may be derived on the basis of costMode3/(costMode1+costMode2+costMode3+costMode4+costMode5). The fourth weight weight4 may be derived on the basis of an error value (e.g., an amplitude value) of the fourth intra prediction mode. The fourth weight weight4 may be derived on the basis of costMode4/(costMode1+costMode2+costMode3+costMode4+costMode5). The fifth weight weight5 may be derived on the basis of an error value (e.g., an amplitude value) of the fifth intra prediction mode. The fifth weight weight5 may be derived on the basis of costMode5/(costMode1+costMode2+costMode3+costMode4+costMode5). Meanwhile, as another example, when K is 5, five intra modes with large histogram amplitudes may be selected, and amplitude values of the modes may be codeMode1, codeMode2, codeMode3, codeMode4, and codeMode5. When the five prediction blocks other than the planar mode are blended, weight values weight1, weight2, weight3, weight4, and weight5 may be derived similarly to the above description. Meanwhile, the prediction block that is generated by blending multiple intra mode derived using DIMD may be Template$_{Intra}$ of expression 4 in the candidate reordering step of embodiment 1.

Embodiment 3

The present embodiment proposes a method of combining a prediction block generated through intraTMP and a prediction block generated in an intra mode derived through DIMD or TIMD to generate a new prediction block. According to the present embodiment, an intra mode is derived in the same template shape as intraTMP to improve intra prediction performance. For example, when a template area of intraTMP has an L-shape, it may be effective to derive an intra mode using both previously reconstructed left and top samples of the current block. Likewise, when a template area of intraTMP is at the top of the current block or on the left, it may be effective to derive an intra mode using a previously reconstructed top sample or a previously reconstructed left sample of the current block, respectively. Therefore, according to an embodiment of the present disclosure, a final prediction block may be generated as shown in expression 17 below.

[Expression 17]

$$Pred_{final} = (w_0 \times Pred_{TMP} + w_1 \times Pred_{Intra} + (1 \ll s-1)) \gg s$$

According to an embodiment, Pred$_{final}$ may be a final prediction block, Pred$_{TMP}$ may be an intraTMP reference block, and Pred$_{Intra}$ may be a prediction block predicted in an intra mode derived using a top or left sample of the current block or both top and left samples. Here, s may be an integer, $w_0$ and $w_1$ may be real numbers, and $w_0 + w_1$ may be equal to 2s. Meanwhile, the intraTMP reference block may be a reference block at a block vector position with the smallest template error. Alternatively, the intraTMP reference block may be a reference block at a block vector position indicated by the candidate index described in embodiment 1. The candidate index may be explicitly signaled. Alternatively, according to another embodiment, the intraTMP reference block may be a block with the smallest template error that is reordered in the candidate reordering step of embodiment 1. Alternatively, the intraTMP reference block may be a block to which a filter is applied in the filtered TMP step of embodiment 1. Alternatively, the intraTMP reference block may be a reference block at a block vector position refined in the fractional search step of embodiment 1. Alternatively, the intraTMP reference block may be a reference block selected in accordance with a combination of all or some of the cases. For example, the intraTMP reference block may be a reference block to which both filtered TMP and a fractional search are applied.

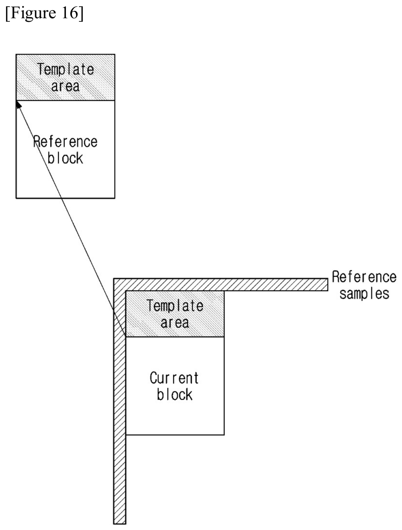

FIG. 16 is a diagram illustrating the case where a template area of intraTMP is at the top of the current block according to an embodiment of the present disclosure. For example, when a template area of intraTMP is at the top of the current block, an intra mode may be derived using only previously reconstructed top samples of the current block as shown in FIG. 16, and $Pred_{Intra}$ may be generated using the intra mode. As an example, an intra mode may be derived on the basis of the DIMD or TIMD mode. Also, the derived intra mode may be $Template_{Intra}$ of expression 4 in the candidate reordering step of embodiment 1.

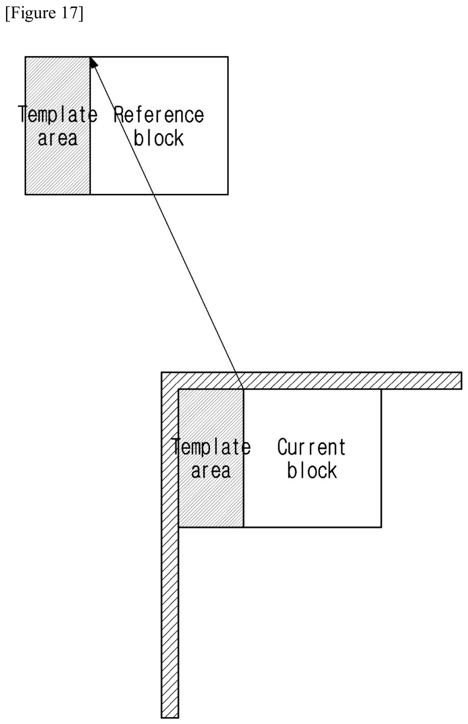

FIG. 17 is a diagram illustrating the case where a template area of intraTMP is on the left side of the current block according to an embodiment of the present disclosure. For example, when a template area of intraTMP is on the left side of the current block, an intra mode may be derived using only previously reconstructed left samples of the current block as shown in FIG. 17, and $Pred_{Intra}$ may be generated using the intra mode. An intra mode may be derived on the basis of the DIMD or TIMD mode, and the derived intra mode may be $Template_{Intra}$ of expression 4 in the candidate reordering step of embodiment 1.

Embodiment 4

The present embodiment proposes a method of signaling intraTMP-related information. It is necessary to effectively perform signaling in consideration of a template shape of intraTMP, whether a fractional position is searched, and various technologies such as filtering TMP and the like. The present disclosure provides a method of effectively signaling intraTMP-related information, thus improving compression performance.

Table 3 below describes signaling syntax of intraTMP-related information according to an embodiment of the present disclosure.

[Table 3]

| Coding unit syntax | Descriptor |
|---|---|
| ... | |
| tmpFlag ⋯ (1) | ae(v) |
| if ( tmpFlag ) | |
| { | |
|     fusionFlag ⋯ (2) | ae(v) |
|     if( !fusionFlag ) | |
|     { | |
|       ftmpFlag ⋯ (3) | ae(v) |
|       tmpIsSubPel ⋯ (4) | ae(v) |
|       if(tmpIsSubPel) | |
|       { | |
|         tmpSubPelIdx ⋯ (5) | ae(v) |
|       } | |
|       templateIdx ⋯ (6) | ae(v) |
|       candidateIdx ⋯ (7) | ae(v) |
|       intrafusionFlag ⋯(8) | ae(v) |
|     } | |
|     else | |
|     { | |
|       fusionIdx ⋯ (9) | ae(v) |

(continued)

| }  |  |
|----|--|

For example, information about whether intraTMP is applied may be signaled. As an example, the information about whether intraTMP is applied may be tmpFlag (e.g., first syntax). tmpFlag with a first value (e.g., 1) may represent that intraTMP is applied, and tmpFlag with a second value (e.g., 0) may represent that intraTMP is not applied. For example, information about whether intraTMP reference blocks are fused may be signaled. As an example, the information about whether intraTMP reference blocks are fused may be fusionFlag (e.g., second syntax). fusionFlag with a first value (e.g., 1) may represent that intraTMP reference blocks are fused, and fusionFlag with a second value (e.g., 0) may represent that intraTMP reference blocks are not fused. For example, the second syntax may be signaled on the basis of a value of the first syntax. As an example, the second syntax may be signaled only when the first syntax has a specific value (e.g., 1) .

For example, information about whether filtering is applied may be signaled. As an example, the information may be ftmpFlag (e.g., third syntax). ftmpFlag with a first value (e.g., 1) may represent that filtering is applied, and ftmpFlag with a second value (e.g., 0) may represent that filtering is not applied. For example, the third syntax may be signaled on the basis of a value of the second syntax. As an example, the third syntax may be signaled only when the second syntax has a specific value (e.g., 0). For example, when the third syntax has a specific value (e.g., true), the filtered TMP step of embodiment 1 may be performed.

For example, information about whether a sub-pel search is performed may be signaled. As an example, the information may be tmpIsSubPel (e.g., fourth syntax). tmpIsSubPel with a first value (e.g., 0) may represent that a sub-pel search is not performed, and when tmpIsSubPel has a value (e.g., 1, ..., or n) other than the first value, information about a sub-pel search, for example, 1/4 pixel, 1/2 pixel, 3/4 pixel, etc., may be included. For example, the fourth syntax may be signaled on the basis of the value of the second syntax. As an example, the fourth syntax may be signaled only when the second syntax has a specific value (e.g., 0). For example, when the fourth syntax has a specific value (e.g., a value other than 0), the sub-pel search step of embodiment 1 may be performed.

For example, when a sub-pel search is performed, information about in which direction a sub-pel search will be performed may be signaled. As an example, the information may be tmpSubPelIdx (e.g., fifth syntax) and may be signaled on the basis of a value of the fourth syntax. For example, the information may be signaled only when the fourth syntax has a specific value (e.g., a value other than 0). As an example, the fifth syntax may indicate a direction such as left-top, top, top-right, left, right, bottom-left, bottom, bottom-right, etc., and may indicate one of several directions. The fractional search step of embodiment 1 may be performed on the basis of the fourth syntax and/or fifth syntax.

For example, information about a template shape may be signaled. As an example, index information of a template shape (i.e., a template position) may be signaled, and the corresponding information may be tmplateIdx (e.g., sixth syntax) and may be signaled on the basis of the value of the second syntax. For example, the information may be signaled only when the second syntax has a specific value (e.g., 0). As an example, the sixth syntax may indicate a template position, that is, a template shape, and thus may be index information for indicating one of various template shapes such as an L-shape, an above shape, a left shape, and the like. This may represent the template shape determination step of embodiment 1.

For example, information about an index indicating one of candidate intraTMP reference blocks may be signaled. As an example, the corresponding information may be information for indicating one of various reference blocks included in the reference block candidate list, may be candidateIdx (e.g., seventh syntax), and may be signaled on the basis of the value of the second syntax. For example, the information may be signaled only when the second syntax has a specific value (e.g., 0).

For example, information about whether an intraTMP reference block and an intra prediction block based on a specific intra mode are combined may be signaled. As an example, the information may be intrafusionFlag (e.g., eighth syntax). When the eighth syntax has a first value (e.g., 1), the intraTMP fusion step of embodiment 1 may be performed, and when the eighth syntax has a second value (e.g., 0), the intraTMP reference block and the intra prediction block may not be combined. Also, the eighth syntax may be signaled on the basis of the value of the second syntax. For example, the eighth syntax may be signaled only when the second syntax has a specific value (e.g., a value other than 0).

For example, when a plurality of intraTMP reference block candidates are fused, information about the number of intraTMP reference blocks to be fused may be signaled. As an example, the information may be fusionIdx (e.g., ninth syntax), and the number of reference blocks may be determined on the basis of a value of the ninth syntax. Also, the ninth syntax may be signaled on the basis of the value of the second syntax. For example, the information may be signaled only when the second syntax has a specific value (e.g., 1). Meanwhile, for example, the ninth syntax with a value of 3 may represent that three candidate intraTMP reference blocks are fused in increasing order of the error (e.g., cost, amplitude value, etc.) described above.

Meanwhile, the signaling order of the first to ninth syntaxes may be determined as shown in Table 1. However, this corresponds to an embodiment of the present disclosure, and the signaling order of the syntaxes may change. For example, the order of the third syntax to the eighth syntax may change. As an example, the third syntax may be signaled first, the fourth, fifth, sixth, and seventh syntaxes may be sequentially signaled, and then the eighth syntax may be signaled last. As another example, the sixth syntax may be signaled first, the seventh, eighth, third, and fourth syntaxes may be sequentially signaled, and then the fifth syntax may be signaled last. As still another example, the sixth syntax may be signaled first, the seventh, fourth, fifth, and third syntaxes may be sequentially signaled, and then the eighth syntax may be signaled last. All the foregoing orders are mere examples of the present disclosure and may change to other possible combinations, which are obviously included in the present disclosure.

For example, the signaling order of intraTMP-related information may be the same as shown in table 4 below. As an example, the signaling turns of the sixth syntax and the third syntax may be changed. templateIdx may be signaled after fusionFlag, and according to the following signaling order, intraTMP reference blocks with the above and left shapes may be fused.

[Table 4]

| Coding unit syntax | Descriptor |
|---|---|
| ... | |
| tmpFlag ⋯ (1) | ae(v) |
| if ( tmpFlag ) | |
| { | |
| fusionFlag ⋯ (2) | ae(v) |
| templateIdx ⋯ (6) | ae(v) |
| if( !fusionFlag ) | |
| { | |
| ftmpFlag ⋯ (3) | ae(v) |
| tmpIsSubPel ⋯ (4) | ae(v) |
| if(tmpIsSubPel) | |
| { | |
| tmpSubPelIdx ⋯(5) | ae(v) |
| } | |
| candidateIdx ⋯ (7) | ae(v) |
| intrafusionFlag ⋯ (8) | ae(v) |
| **}** | |
| else | |
| } | |
| fusionIdx ⋯ (9) | ae(v) |
| } | |

In this case, the sixth syntax may be signaled before the third syntax and may be acquired solely on the basis of a value of the first syntax rather than the second syntax. For example, in table 4, the sixth syntax may be acquired only when the first syntax has a specific value (e.g., 1). Meanwhile, in the example of table 4, the signaling order may change. For example, the signaling order of the sixth syntax, the third syntax, the fourth syntax, the fifth syntax, the seventh syntax, and the eighth syntax may change, such that the fifth syntax may be signaled first, the seventh syntax, the eighth syntax, the sixth syntax, and the third syntax may be signaled, and then the fourth syntax may be signaled last. As another example, the fifth syntax may be signaled first, the seventh, third, fourth, and sixth syntaxes may be signaled, and then the eighth syntax may be signaled last. These are mere examples according to the present disclosure and may change to other possible combinations.

Meanwhile, description of the first syntax to the ninth syntax is the same as the above description and will not be reiterated.

As another example, some information may not be signaled. For example, signaling of the sixth syntax templateIdx may be omitted as shown below. In this case, templateIdx may be derived in accordance with a promise between the encoder and decoder or derived as a specific value under a specific condition without signaling of any information on a template shape, for example, templateIdx information.

[Table 5]

| Coding unit syntax | Descriptor |
|---|---|
| ... | |
| tmpFlag ···(1) | ae(v) |
| if ( tmpFlag ) | |
| { | |
|     fusionFlag ··· (2) | ae(v) |
|     if( !fusionFlag ) | |
|     { | |
|       ftmpFlag ··· (3) | ae(v) |
|       tmpIsSubPel ··· (4) | ae(v) |
|       if(tmpIsSubPel) | |
|       { | |
|         tmpSubPelIdx ··· (5) | ae(v) |
|       } | |
|       candidateIdx ··· (7) | ae(v) |
|       intrafusionFlag ··· (8) | ae(v) |
|     } | |
|     else | |
|     { | |
|       fusionIdx ··· (9) | ae(v) |
|     } | |

Meanwhile, in the example of table 5, the signaling order may also change. The signaling order of the third to fifth syntaxes, the seventh syntax, and the eighth syntax may change, such that the seventh syntax may be signaled first, the eighth syntax, the third syntax, and the fourth syntax may be signaled, and then the fifth syntax may be signaled last. Meanwhile, as another example, the seventh syntax may be signaled first, the eighth, fourth, and fifth syntaxes may be signaled, and then the third syntax may be signaled last. However, these are mere examples according to the present disclosure and may change to other possible combinations. Meanwhile, as shown in table 5, the sixth syntax may not be signaled, but one or more of the third to eighth syntaxes may not be signaled, which is also included in the present disclosure.

Embodiment 5

IntraTMP may involve various technologies for improving coding performance such as sub-pel search, fusion, filtering, and the like. The present embodiment defines various technologies of intraTMP and proposes a method of managing the technologies in the form of a list, improving coding performance by effectively applying and signaling the technologies of intraTMP.
For example, a mode for generating a prediction block in intraTMP may be defined as follows.

(1) Default mode:

-    A mode of performing an intraTMP search and then determining a reference block with the smallest SAD error (cost) as a prediction block.

-   Alternatively, a mode of performing an intraTMP search and then determining, as a prediction block, a reference block selected by index signaling from a reference block candidate list that is ordered in increasing order of SAD error.

In addition to SAD, other error calculation methods, such as SATD, SSE, MR-SAD, MR-SSE, MR-SATD, etc., may be used.

(2) Filtering mode:

-   A mode of applying the filtered TMP step of embodiment 1 to the prediction block of (1) to generate a prediction block.

(3) Sub-pel search mode:

-   A mode of applying the fractional search step of embodiment 1 to the prediction block of (1) to generate a prediction block.

(4) Intra fusion mode:

-   A mode of applying the intraTMP fusion step of embodiment 1 to the prediction block of (1) to generate a prediction block combined with an intra mode.

The intra mode may be derived on the basis of TIMD or DIMD.

(5) Cost-based fusion mode:

-   A mode of performing an intraTMP search and then combining, into a prediction block, n reference blocks with smallest errors from a reference block candidate list that is ordered in increasing order of error (e.g., SAD) using error-based weights (n is a real number).

Weights for the combination may be derived on the basis of errors. For example, when the error calculation method is SAD, a weight ratio may be as follows.

$$w_i = \frac{\sum_{i=1}^{n}(SAD_i)\text{-}SAD_i}{(n\text{-}1) * \sum_{i=1}^{n}SAD_i}$$

In addition to SAD, other error calculation methods, such as SATD, SSE, MR-SAD, MR-SSE, MR-SATD, etc., may be used.

(6) Fixed-weight fusion mode:

-   A mode of performing an intraTMP search and then combining, into a prediction block, n reference blocks with smallest SAD errors from a reference block candidate list that is ordered in increasing order of error (e.g., SAD, etc.)

using fixed weights (n is a real number).

For example, when n equals 2, $w_1$ may equal 1/2, and $w_2$ may equal 1/2.

For example, when n equals 3, $w_1$ may equal 22/64, $w_2$ may equal 21/64, and $w_3$ may equal 21/64.

In addition to SAD, other error calculation methods, such as SATD, SSE, MR-SAD, MR-SSE, MR-SATD, etc., may be used.

(7) Filter based fusion mode:

- A mode of performing an intraTMP search and then applying the method of the filter-based intraTMP fusion step of embodiment 1 to n reference blocks with smallest errors from a reference block candidate list that is ordered in increasing order of error (e.g., SAD) to generate a combined prediction block (n is a real number).

In addition to SAD, other error calculation methods, such as SATD, SSE, MR-SAD, MR-SSE, MR-SATD, etc., may be used.

For example, the modes defined above may be included in a candidate list, and information on the list (e.g., indexes, etc.) may be signaled. Meanwhile, for example, a method of constructing a candidate list may be defined as a promise between the encoder and decoder. Also, a size of the candidate list may be defined as a promise between the encoder and decoder. Further, one mode from the constructed candidate list may be signaled.

For example, a candidate list of the modes (1) to (7) defined above may be constructed as shown in table 6 below. In this case, specific information (e.g., an index) may be signaled to select a single candidate, and accordingly, it is possible to know information on the mode used in intraTMP. Meanwhile, since table 6 below corresponds to an embodiment of the present disclosure, a method of constructing a candidate list may change. For example, a candidate list may include modes in decreasing order of selection rate.

[Table 6]

| Candidate list | |
| --- | --- |
| Index | Mode |
| 0 | (1) |
| 1 | (2) |
| 2 | (3) |
| 3 | (4) |
| 4 | (5) |
| 5 | (6) |
| 6 | (7) |
| 7 | (8) |

Although table 6 includes mode (1) to mode (8), some modes may not be included, and mode (8) may not be included. In other words, the candidate list may include mode (1) to mode (7). For example, mode (8) in table 6 may be a new mode derived as a combination of two or more of modes (1) to (7). As an example, one mode may be derived on the basis of a combination of mode (2) + mode (3). As another example, one mode may be derived on the basis of a combination of mode (3) + mode (4). As another example, one mode may be derived on the basis of a combination of mode (3) + mode (5). Also, as another example, one mode may be derived on the basis of a combination of mode (3) + mode (4) + mode (7). However, these are mere examples, and mode (8) may be all possible combinations of one or more of modes (1) to (7) without any limitation on the number of combined modes.

As another example, the modes (1) to (7) defined above may be included in a candidate list as single modes, but a candidate list may include new modes acquired by combining modes (1) to (7). This will be described with reference to table 7.

[Table 7]

| Candidate list | |
| --- | --- |
| **Index** | **Mode** |
| 0 | (1) |
| 1 | (2) |
| 2 | (2) + (3) |
| 3 | (3) + (4) |
| 4 | (4) + (6) |
| 5 | (4) + (7) |
| 6 | (2) + (3) + (4) |
| 7 | (7) |

Referring to table 7, information on a corresponding candidate list (e.g., an index for selecting a candidate, etc.) may be signaled. Here, a method of constructing the candidate list may be promised between the encoder and decoder. A size of the candidate list may be defined as a promise between the encoder and decoder. Also, information for specifying one mode in the constructed candidate list may be signaled. A mode used for intraTMP at the decoder may be determined from the information on the candidate list. Meanwhile, the method of constructing a candidate list may change. For example, the candidate list may include modes in decreasing order of selection rate.

Embodiment 6

IntraTMP may involve various technologies for improving coding performance such as sub-pel search, fusion, filtering, and the like. The present embodiment defines various technologies of intraTMP and proposes combinations for generating a prediction block. The present embodiment can improve intra prediction performance by effectively generating a prediction block in intraTMP.

Modes for generating a prediction block in intraTMP may include mode (1) to mode (7) as described in embodiment 5. According to an embodiment, each prediction block generated in the modes (1) to (7) defined above may be a final prediction block. A mode may be selected through signaling or derived from a promise between the encoder and decoder. Meanwhile, for example, a prediction block based on one of the modes (1) to (7) may be a final prediction block of intraTMP. As another example, a new prediction block may be generated by combining two or more of prediction blocks based on the modes defined in embodiment 5, and the generated prediction block may be a final prediction block. As an example, a prediction block based on a combination of mode (2) + mode (3) may be a final prediction block of intraTMP. As another example, a prediction block based on a combination of mode (2) + mode (4) may be a final prediction block of intraTMP. As another example, a prediction block based on a combination of mode (3) + mode (4) may be a final prediction block of intraTMP. As another example, a prediction block based on a combination of mode (3) + mode (5) may be a final prediction block of intraTMP. As another example, a prediction block based on a combination of mode (3) + mode (6) may be a final prediction block of intraTMP. As another example, a prediction block based on a combination of mode (3) + mode (7) may be a final prediction block of intraTMP. As another example, a prediction block based on a combination of mode (4) + mode (5) may be a final prediction block of intraTMP. As another example, a prediction block based on a combination of mode (4) + mode (6) may be a final prediction block of intraTMP. As another example, a prediction block based on a combination of mode (4) + mode (7) may be a final prediction block of intraTMP. As another example, a prediction block based on a combination of mode (2) + mode (3) + mode (4) may be a final prediction block of intraTMP. In addition to these, a final prediction block may be generated on the basis of all possible combinations of modes.

According to another embodiment, a new prediction block may be generated on the basis of combination of different template areas for the defined modes (1) to (7), and the generated prediction block may be a final prediction block. Mode information (or combination information) may be signaled or derived in accordance with a promise between the encoder and decoder.

For example, a prediction block selected through an L-shape search in mode (1), a prediction block selected through an above-shape search in mode (1), a prediction block selected through a left-shape search in mode (1), a prediction block selected through an L-shape search in mode (2), a prediction block selected through an above-shape search in mode (2), a prediction block selected through a left-shape search in mode (2), a prediction block selected through an L-shape search in mode (3), a prediction block selected through an above-shape search in mode (3), and a prediction block selected through a left-shape search in mode (3) may be derived. Here, the derived prediction blocks may be combined. For example, the prediction block selected through an L-shape search in mode (1) and the prediction block selected through an above-shape search in mode (1) may be combined. Also, the prediction block selected through an L-shape search in mode (1) and the prediction block selected through an above-shape search in mode (3) may be combined. These are mere examples, and a final prediction block may be generated from all possible combinations.

Embodiments 1 to 6 have been described with numbers for clarity of description, and each embodiment may be applied solely or in combination. Also, the names of the first to ninth syntaxes are for clarity of description, and obviously, the present disclosure is not limited by the names.

Embodiment of image encoding and decoding method

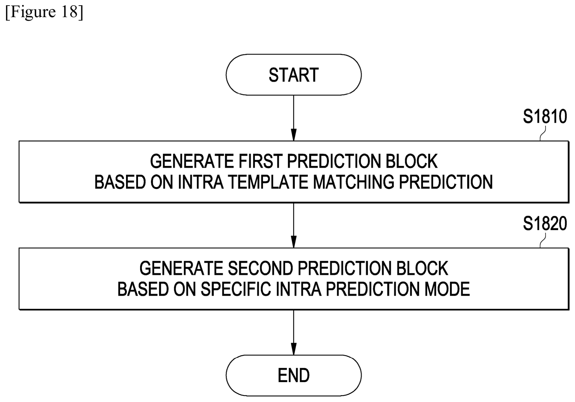

FIG. 18 is a diagram illustrating an image decoding method that may be performed at an image decoding apparatus or an image encoding method that may be performed at an image encoding apparatus according to an embodiment of the present disclosure.

FIG. 8 may be based on embodiments 1 to 6 of the present disclosure.

First, an example of an image decoding method will be described with reference to FIG. 18.

For example, the image decoding method of FIG. 18 may be performed by the image decoding apparatus described above with reference to the other drawings.

First, according to the image decoding method, a first prediction block may be generated on the basis of intra template matching prediction (S1810). For example, intra template matching prediction may be intraTMP, which is the same as described above, and the first prediction block may be the intraTMP reference block described above. Subsequently, a second prediction block may be generated on the basis of a specific intra prediction mode (S 1820), and a final prediction block may be generated on the basis of the first prediction block and the second prediction block (S1830). For example, the specific intra prediction mode may be an intra prediction mode that is derived through TIMD or DIMD. For example, the second prediction block may be a plurality of prediction blocks generated on the basis of a plurality of intra prediction modes derived through TIMD or DIMD. As an example, the specific intra prediction mode may be derived on the basis of a template shape of intraTMP. For example, the template shape may be acquired from a bitstream or derived as a specific value in accordance with a promise between the encoder and decoder or a specific condition. For example, the first prediction block may be generated on the basis of a prediction mode selected from an intraTMP mode list. For example, the selected prediction mode may be selected on the basis of prediction mode index information. The index information may be signaled using a bitstream. For example, the intraTMP mode list may include at least one of the default mode, the filtering mode, the sub-pel search mode, the intra fusion mode, the cost-based fusion mode, and the filter-based fusion mode. As another example, the intraTMP mode list may include prediction modes generated as combinations of at least one of the default mode, the filtering mode, the sub-pel search mode, the intra fusion mode, the cost-based fusion mode, and the filter-based fusion mode. For example, the cost-based fusion mode may be based on errors calculated using SAD, SATD, SSE, MR-SAD, MR-SSE, or MR-SATD. For example, the first prediction block may be a prediction block acquired by combining a plurality of intraTMP blocks.

According to the present disclosure, in the case of performing intra-frame encoding on a still image or a video, a reference block of an intraTMP mode and an intra mode are derived, and a final prediction block is generated using various prediction block combination methods. Accordingly, it is possible to expect an improvement in prediction performance, and thus coding efficiency can increase.

First, an example of an image encoding method will be described with reference to FIG. 18.

For example, the image decoding method of FIG. 18 may be performed by the image encoding apparatus described above with reference to the other drawings.

First, according to the image encoding method, a first prediction block may be generated on the basis of intra template matching prediction (S1810). For example, intra template matching prediction may be intraTMP, which is the same as described above, and the first prediction block may be the intraTMP reference block described above. Subsequently, a second prediction block may be generated on the basis of a specific intra prediction mode (S1820), and a final prediction block may be generated on the basis of the first prediction block and the second prediction block (S1830). For example, the specific intra prediction mode may be an intra prediction mode that is derived through TIMD or DIMD. For example, the second prediction block may be a plurality of prediction blocks generated on the basis of a plurality of intra prediction modes derived through TIMD or DIMD. As an example, the specific intra prediction mode may be derived on the basis of a template shape of intraTMP. For example, the template shape may be signaled using a bitstream or derived as a specific value in accordance with a promise between the encoder and decoder or a specific condition. For example, the first prediction block may be generated on the basis of a prediction mode selected from an intraTMP mode list. For example, the selected prediction mode may be selected on the basis of prediction mode index information. The index information may be signaled using a bitstream. For example, the intraTMP mode list may include at least one of the default mode, the filtering mode, the sub-pel search mode, the intra fusion mode, the cost-based fusion mode, and the filter-based fusion mode. As another example, the intraTMP mode list may include prediction modes generated as combinations of at least one of the default mode, the filtering mode, the sub-pel search mode, the intra fusion mode, the cost-based fusion mode, and the filter-based fusion mode. For example, the cost-based fusion mode may be based on errors calculated using SAD, SATD, SSE, MR-SAD, MR-SSE, or MR-SATD. For example, the first prediction block may be a prediction block acquired by combining a plurality of intraTMP blocks.

Although not shown in the drawing, according to the image encoding method performed at the image encoding side, information on intraTMP may be encoded first, and then information on fusion of prediction blocks may be encoded. At the encoding side, a determination may be made regarding intraTMP (e.g., it may be determined whether to perform intraTMP, etc.) before information is encoded, and a determination may be made regarding fusion of prediction blocks (e.g., it may be determined whether to fuse prediction blocks, etc.). For example, information on intraTMP and information on fusion of prediction blocks may include the information described above in embodiments 1 to 6 and information described with reference to tables 3 to 7.

According to the present disclosure, in the case of performing intra-frame encoding on a still image or a video, a reference block of an intraTMP mode and an intra mode are derived, and a final prediction block is generated using various prediction block combination methods. Accordingly, it is possible to expect an improvement in prediction performance, and thus coding efficiency can increase.

In addition, for example, a computer-readable medium on which a bitstream generated using the image encoding method is recorded can be provided, and a method of transmitting a bitstream generated using the image encoding method can also be provided.

Meanwhile, the image decoding and encoding method of FIG. 18 corresponds to an embodiment of the present disclosure. Accordingly, a certain step may be changed, the order of steps may be changed, or some steps may be added or omitted. It is obvious that these modifications are included in the present disclosure.

According to the present disclosure, in the case of performing intra-frame encoding on a still image or a video, a reference block (i.e., prediction block) of an intraTMP mode and an intra mode are derived, and a final prediction block is generated using various prediction block combination methods. Accordingly, it is possible to expect an improvement in prediction performance, and thus coding efficiency can increase.

Exemplary methods of the present disclosure are expressed as a series of operations for clarity of description. However, this is not intended to limit the order in which operations are performed, and the operations may be performed simultaneously or in a different order as necessary. To implement a method according to the present disclosure, illustrative operations may additionally include other operations, include operations other than some operations, or include additional other operations instead of some operations.

According to the present disclosure, an image encoding apparatus or an image decoding apparatus that performs a certain operation (step) may perform an operation (step) of checking an execution condition or situation of the corresponding operation (step). For example, when it is described that a certain operation is performed if a certain condition is satisfied, the image encoding apparatus or the image decoding apparatus may perform an operation of determining whether the certain condition is satisfied and then perform the certain operation.

Various embodiments of the present disclosure are not a list of all possible combinations but are intended to describe representative aspects of the present disclosure. Descriptions of various embodiments may be applied independently or in a pair of two or more thereof.

In addition, various embodiments of the present disclosure may be implemented using hardware, firmware, software, a combination thereof, or the like. Hardware implementation may include one or more application-specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, or the like.

In addition, an image decoding apparatus and an image encoding apparatus to which an embodiment of the present disclosure is applied may be included in a multimedia broadcasting transmission and reception device, a mobile communication terminal, a home cinema video device, a digital cinema video device, a surveillance camera, a video dialogue device, a device for real-time communication such as video communication, a mobile streaming device, a storage medium, a camcorder, a video on demand (VoD) service provision device, an over the top (OTT) video device, an Internet streaming service provision device, a three-dimensional (3D) video device, a video telephony device, a medical video device, and the like, and may be used to process a video signal or a data signal. For example, the OTT video device may include a game console, a Blu-ray player, an Internet access television (TV), a home theater system, a smartphone, a tablet personal computer (PC), a digital video recorder (DVR), and the like.

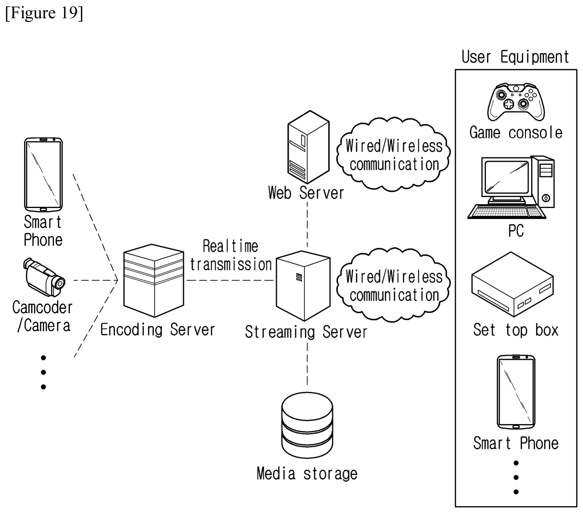

FIG. 19 is a view showing a content streaming system, to which an embodiment of the present disclosure is applicable.

As shown in FIG. 19, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

[Industrial Applicability]

The embodiments of the present disclosure may be used to encode or decode an image.

**Claims**

1. An image decoding method, comprising:

   generating a first prediction block on the basis of intra template matching prediction (intraTMP);
   generating a second prediction block on the basis of a specific intra prediction mode; and
   generating a final prediction block on the basis of the first prediction block and the second prediction block.

2. The image decoding method of claim 1, wherein the specific intra prediction mode is an intra prediction mode derived through template-based intra mode derivation (TIMD) or decoder-side intra mode derivation (DIMD).

3. The image decoding method of claim 1, wherein the second prediction block is a plurality of prediction blocks generated on the basis of a plurality of intra prediction modes derived through TIMD or DIMD.

4. The image decoding method of claim 1, wherein the specific intra prediction mode is derived on the basis of a template shape of the intraTMP.

5. The image decoding method of claim 4, wherein the template shape is acquired from a bitstream.

6. The image decoding method of claim 1, wherein the first prediction block is generated on the basis of a prediction block selected from an intraTMP mode list.

7. The image decoding method of claim 6, wherein the selected prediction mode is selected on the basis of prediction mode index information.

8. The image decoding method of claim 6, wherein the intraTMP mode list includes at least one of a default mode, a filtering mode, a sub-pel search mode, an intra fusion mode, a cost-based fusion mode, and a filter-based fusion mode.

9. The image decoding method of claim 6, wherein the intraTMP mode list includes a prediction mode generated as a combination of at least one of a default mode, a filtering mode, a sub-pel search mode, an intra fusion mode, a cost-based fusion mode, and a filter-based fusion mode.

10. The image decoding method of claim 8, wherein the cost-based fusion mode is based on an error calculated using a sum of difference (SAD), a sum of transformed difference (SATD), a sum of squared error (SSE), a mean-removed sum of difference (MR-SAD), a mean-removed sum of squared error (MR-SSE), or a mean-removed sum of transformed difference (MR-SATD).

11. The image decoding method of claim 1, wherein the first block is a prediction block acquired by combining a plurality of intraTMP blocks.

12. An image encoding method, comprising:

generating a first prediction block on the basis of intra template matching prediction (intraTMP);
generating a second prediction block on the basis of a specific intra prediction mode; and
generating a final prediction block on the basis of the first prediction block and the second prediction block.

13. A computer-readable recording medium for storing a bitstream generated using an image encoding method, wherein the image encoding method comprises:

generating a first prediction block on the basis of intra template matching prediction (intraTMP);
generating a second prediction block on the basis of a specific intra prediction mode; and
generating a final prediction block on the basis of the first prediction block and the second prediction block.

14. A method of transmitting a bitstream generated using an image encoding method, wherein the image encoding method comprises:

generating a first prediction block on the basis of intra template matching prediction (intraTMP);
generating a second prediction block on the basis of a specific intra prediction mode; and
generating a final prediction block on the basis of the first prediction block and the second prediction block.

[Figure 1]

[Figure 2]

IMAGE ENCODING APPARATUS — 100

INPUT IMAGE → IMAGE PARTITIONER (110) → (+/−) 115 → TRANSFORMER (120) → QUANTIZER (130) → ENTROPY ENCODER (190) → BITSTREAM

DEQUANTIZER (140) → INVERSE TRANSFORMER (150) → (+) 155

INTER PREDICTION UNIT (180)

INTRA PREDICTION UNIT (185)

DPB / MEMORY (170)

FILTER (160)

[Figure 3]

IMAGE DECODING APPARATUS 200

- BITSTREAM → ENTROPY DECODER 210
- DEQUANTIZER 220
- INVERSE TRANSFORMER 230
- 235 (+)
- FILTER 240 → RECONSTRUCTED IMAGE
- MEMORY
- DPB 250
- INTRA PREDICTION UNIT 265
- INTER PREDICTION UNIT 260

[Figure 4]

```
                    ┌─────────────┐
                    │    START    │
                    └──────┬──────┘
                           │                           S400
        ┌──────────────────▼──────────────────────┐
        │          CONSTRUCT MPM LIST             │
        └──────────────────┬──────────────────────┘
                           │                           S410
        ┌──────────────────▼──────────────────────┐
        │  DETERMINE INTRA PREDICTION MODE OF      │
        │            CURRENT BLOCK                 │
        └──────────────────┬──────────────────────┘
                           │                           S420
        ┌──────────────────▼──────────────────────┐
        │   ENCODE INTRA PREDICTION MODE INFORMATION│
        │ (INCLUDING MPM FLAG, NOT-PLANAR FLAG,    │
        │  MPM IDX, AND/OR REMAINING INTRA         │
        │  PREDICTION MODE INFORMATION)            │
        └──────────────────┬──────────────────────┘
                           │
                    ┌──────▼──────┐
                    │     END     │
                    └─────────────┘
```

[Figure 5]

```
                    ┌─────────────┐
                    │    START    │
                    └──────┬──────┘
                           │                              S510
    ┌──────────────────────▼──────────────────────────────┐
    │         ACQUIRE INTRA PREDICTION MODE INFORMATION     │
    │  (INCLUDING MPM FLAG, NOT-PLANAR FLAG, MPM IDX, AND/OR│
    │ REMAINING INTRA PREDICTION MODE INFORMATION) FROM BITSTREAM│
    └──────────────────────┬──────────────────────────────┘
                           │                              S520
    ┌──────────────────────▼──────────────────────────────┐
    │                  CONSTRUCT MPM LIST                   │
    └──────────────────────┬──────────────────────────────┘
                           │                              S530
    ┌──────────────────────▼──────────────────────────────┐
    │      DETERMINE INTRA PREDICTION MODE OF CURRENT BLOCK │
    │  BASED ON MPM LIST AND INTRA PREDICTION MODE INFORMATION│
    └──────────────────────┬──────────────────────────────┘
                           │
                    ┌──────▼──────┐
                    │     END     │
                    └─────────────┘
```

[Figure 6]

[Figure 7]

4 x 4 block

Other block

EP 4 697 702 A1

[Figure 8]

$$\omega_1 = \frac{43}{64} \times \frac{ampl(M_1)}{ampl(M_1) + ampl(M_2)}$$

$$\omega_2 = \frac{43}{64} \times \frac{ampl(M_2)}{ampl(M_1) + ampl(M_2)}$$

$$\omega_3 = \frac{21}{64}$$

$$\sum_{i=1}^{3} \omega_i \times Pred_i$$

[Figure 9]

[Figure 10]

S1001
IntraTMP flag

S1002
Get template shape

S1003
Search best N templates

S1004
Filtered fusion — true

false S1005
Candidates reordering

S1006
Get candidate index

S1007
Fractional search

S1008
Filtered TMP

S1009
Intra fusion — false

true S1010
IntraTMP fusion

S1011
IntraTMP

S1012
Filter based IntraTMP fusion

[Figure 11]

L-shape          Above shape          Left shape

[Figure 12]

[Figure 13]

The best integer pixel position

Integer-pel position pixel

Fractional(half)-pel position pixel

[Figure 14]

[Figure 15]

[Figure 16]

[Figure 17]

[Figure 18]

START

S1810

GENERATE FIRST PREDICTION BLOCK
BASED ON INTRA TEMPLATE MATCHING PREDICTION

S1820

GENERATE SECOND PREDICTION BLOCK
BASED ON SPECIFIC INTRA PREDICTION MODE

END

[Figure 19]

## INTERNATIONAL SEARCH REPORT

| | International application No. |
|---|---|
| | **PCT/KR2024/005015** |

| A. | CLASSIFICATION OF SUBJECT MATTER |
|---|---|
| | **H04N 19/11**(2014.01)i; **H04N 19/105**(2014.01)i; **H04N 19/593**(2014.01)i; **H04N 19/70**(2014.01)i |

According to International Patent Classification (IPC) or to both national classification and IPC

| B. | FIELDS SEARCHED |
|---|---|

Minimum documentation searched (classification system followed by classification symbols)

H04N 19/11(2014.01); H04N 19/103(2014.01); H04N 19/105(2014.01); H04N 19/117(2014.01); H04N 19/119(2014.01); H04N 19/176(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 특정 인트라 예측 모드(specific intra prediction mode), TIMD(Template-based Intra Mode Derivation), DIMD(Decoder-side Intra Mode Derivation), 템플릿 형태(template shape), 인트라 템플릿 매칭 예측 모드 리스트(intra template matching prediction mode list), 조합(combination)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2018-0084662 A (INDUSTRY ACADEMY COOPERATION FOUNDATION OF SEJONG UNIVERSITY) 25 July 2018 (2018-07-25)<br>See claims 3 and 6. | 1-5,12-14 |
| A | | 6-11 |
| Y | WO 2022-116113 A1 (GUANGDONG OPPO MOBILE TELECOMMUNICATIONS CORP., LTD.) 09 June 2022 (2022-06-09)<br>See claim 1. | 1-5,12-14 |
| Y | KR 10-2023-0003005 A (TENCENT AMERICA LLC) 05 January 2023 (2023-01-05)<br>See paragraphs [0019], [0097] and [0114]. | 2,4-5 |
| A | KR 10-2476280 B1 (LG ELECTRONICS INC.) 13 December 2022 (2022-12-13)<br>See claim 1. | 1-14 |

| ☑ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 July 2024** | **23 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/005015**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2023-0002095 A (KT CORPORATION) 05 January 2023 (2023-01-05)<br>See paragraphs [0020]-[0021]. | 1-14 |

Form PCT/ISA/210 (second sheet) (July 2022)

## INTERNATIONAL SEARCH REPORT
### Information on patent family members

International application No.

**PCT/KR2024/005015**

| Patent document cited in search report | | | Publication date (day/month/year) | Patent family member(s) | | | Publication date (day/month/year) |
|---|---|---|---|---|---|---|---|
| KR | 10-2018-0084662 | A | 25 July 2018 | KR | 10-2021-0019481 | A | 22 February 2021 |
| WO | 2022-116113 | A1 | 09 June 2022 | CN | 116601957 | A | 15 August 2023 |
| | | | | CN | 117354511 | A | 05 January 2024 |
| | | | | JP | 2024-503193 | A | 25 January 2024 |
| | | | | KR | 10-2023-0111255 | A | 25 July 2023 |
| | | | | US | 2023-0319265 | A1 | 05 October 2023 |
| KR | 10-2023-0003005 | A | 05 January 2023 | CN | 115529852 | A | 27 December 2022 |
| | | | | EP | 4107949 | A1 | 28 December 2022 |
| | | | | EP | 4107949 | A4 | 04 October 2023 |
| | | | | JP | 2023-527666 | A | 30 June 2023 |
| | | | | JP | 7395771 | B2 | 11 December 2023 |
| | | | | US | 2022-0345692 | A1 | 27 October 2022 |
| | | | | WO | 2022-232784 | A1 | 03 November 2022 |
| KR | 10-2476280 | B1 | 13 December 2022 | KR | 10-2020-0108085 | A | 16 September 2020 |
| | | | | KR | 10-2022-0165288 | A | 14 December 2022 |
| | | | | KR | 10-2024-0055111 | A | 26 April 2024 |
| | | | | KR | 10-2657933 | B1 | 22 April 2024 |
| | | | | US | 11706405 | B2 | 18 July 2023 |
| | | | | US | 2021-0076028 | A1 | 11 March 2021 |
| | | | | US | 2023-0308637 | A1 | 28 September 2023 |
| | | | | WO | 2019-190181 | A1 | 03 October 2019 |
| KR | 10-2023-0002095 | A | 05 January 2023 | CN | 117813821 | A | 02 April 2024 |
| | | | | WO | 2023-277538 | A1 | 05 January 2023 |

Form PCT/ISA/210 (patent family annex) (July 2022)